(19) **Europäisches Patentamt / European Patent Office / Office européen des brevets**

(11) **EP 4 063 436 A1**

(12) **EUROPEAN PATENT APPLICATION**
published in accordance with Art. 153(4) EPC

(43) Date of publication:
**28.09.2022 Bulletin 2022/39**

(21) Application number: **20890479.7**

(22) Date of filing: **16.11.2020**

(51) International Patent Classification (IPC):
$C08J\ 5/04$ (2006.01)     $C08G\ 18/58$ (2006.01)
$C08G\ 59/40$ (2006.01)     $C08K\ 5/29$ (2006.01)
$C08K\ 7/02$ (2006.01)     $C08L\ 63/00$ (2006.01)

(52) Cooperative Patent Classification (CPC):
**C08G 18/58; C08G 59/40; C08J 5/04; C08K 5/29;
C08K 7/02; C08L 63/00**

(86) International application number:
**PCT/JP2020/042584**

(87) International publication number:
**WO 2021/100649 (27.05.2021 Gazette 2021/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **18.11.2019 JP 2019207633
03.06.2020 JP 2020096754**

(71) Applicant: **Toray Industries, Inc.
Tokyo, 103-8666 (JP)**

(72) Inventors:
• **MATSUKAWA, Ko**
  **Nagoya-shi, Aichi 455-8502 (JP)**
• **HIRANO, Masanori**
  **Iyo-gun, Ehime 791-3193 (JP)**
• **NAGANO, Maki**
  **Nagoya-shi, Aichi 455-8502 (JP)**
• **TOMIOKA, Nobuyuki**
  **Nagoya-shi, Aichi 455-8502 (JP)**

(74) Representative: **Mewburn Ellis LLP
Aurora Building
Counterslip
Bristol BS1 6BX (GB)**

(54) **METHOD FOR FORMING FIBER-REINFORCED COMPOSITE MATERIAL AND EPOXY RESIN COMPOSITION FOR USE THEREIN**

(57) The present invention aims to provide an epoxy resin composition for a fiber-reinforced composite material that maintains low viscosity during injection into reinforcing fibers to realize good impregnating and also has high toughness and high heat resistance and also aims to provide a fiber-reinforced composite material produced therefrom. Also provided is a molding method for a fiber-reinforced composite material including at least a reinforcing fiber [A] and a cured product of an epoxy resin composition [B], wherein the epoxy resin composition [B] includes the components [a], [b], and [c] specified below, and the epoxy resin composition [B] is cured in such a manner that the absorbance ratio Da/(Da+Db) is in the range of 0.4 to 1 in producing the fiber-reinforced composite material: [a] an epoxy resin having at least two oxirane groups in the molecule, [b] an epoxy resin curing agent having at least two isocyanate groups in the molecule, and [c] a catalyst.

EP 4 063 436 A1

**Description**

TECHNICAL FIELD

The present invention relates to a molding method for a fiber-reinforced composite material suitable for aerospace applications and automobile applications and also to an epoxy resin composition suitably usable therefor.

BACKGROUND ART

Fiber-reinforced composite materials made up of reinforcing fibers and matrix resins can be applied to various material designs that make use of advantages of reinforcing fibers and matrix resins, and accordingly, they are now in increasingly wider use in many fields such as aerospace, sports, and general industries.

Examples of reinforcing fibers include glass fiber, aramid fiber, carbon fiber, and boron fiber. Furthermore, both thermosetting resins and thermoplastic resins may be useful as the matrix resins, but thermosetting resins are used more frequently because of high heat resistance and productivity. Examples of useful thermosetting resins include epoxy resins, unsaturated polyester resins, vinyl ester resins, phenol resins, bis-maleimide resins, and cyanate resins. In particular, epoxy resins have been used suitably from the viewpoint of mechanical properties such as adhesion between resin and reinforcing fibers, dimensional stability, and the strength and rigidity of the intended composite materials.

For the production of fiber-reinforced composite materials, various methods such as the prepreg molding method, hand lay-up method, filament winding method, pultrusion method, and RTM (resin transfer molding) method, resin film infusion method, and press forming method are generally applied. In the case where high productivity is required, the use of the RTM method, resin film infusion method, or press forming method is preferred.

As the matrix resins, the above conventional processes for molding fiber-reinforced composite materials commonly use thermosetting resins that are in a liquid or semi-solid state at room temperature, that is, low in molecular weight, to realize good impregnating property in impregnating reinforcing-fiber base materials. In the case of fiber-reinforced composite materials containing these resins, cured products of thermosetting resins are commonly lower in toughness than cured products of thermoplastic resins, leading to fiber-reinforced composite materials relatively low in impact resistance, which has been a serious problem.

Compared with this, preforms including a binder containing a thermoplastic resin interlayer and matrix resins with improved toughness have been developed in recent years, and investigations on their application to the primary structure of carbon fiber reinforced composite plastics (CFRP) are also under way. In particular, matrix resins that are low in viscosity and at the same time high in toughness and heat resistance have been developed to provide an important technique that may influence the above molding processes, and expectations are now growing for the modification of matrix resins themselves.

In particular, it is known that the application of a matrix resin that contains a liquid isocyanate curing agent serves to improve the toughness and heat resistance while maintaining a low viscosity (Patent documents 1 and 2).

Patent document 1, which is intended to provide a material for sealants or coating materials, discloses a technique that uses a liquid isocyanate as a curing agent and 0.001 to 1 mass% of diazabicycloundecene as catalyst and performs curing in a medium temperature range of 70°C to 100°C to provide an epoxy resin composition having high heat resistance.

Patent document 2 discloses a technique in which a polyol is added to an epoxy resin composition that contains an excessive amount of isocyanate as a curing agent in order to produce an epoxy resin composition that cures in a short time at a low temperature and has high heat resistance and toughness.

Patent document 3 shows that a cured product having increased heat resistance can be produced by adding an isocyanate pre-reacted with a polyol in a largely excessive amount, namely 3 equivalents to 20 equivalents, to the epoxy and uses a Lewis acid and base catalyst to promote the oxazolidone cyclization reaction.

PRIOR ART DOCUMENTS

PATENT DOCUMENTS

Patent document 1: International Publication WO 2014/184082
Patent document 2: International Publication WO 2016/102358
Patent document 3: International Publication WO 2019/046382

SUMMARY OF INVENTION

PROBLEMS TO BE SOLVED BY THE INVENTION

In Patent document 1, the proposed matrix resin is produced by advantageously promoting the self-polymerization of an isocyanate through medium-temperature curing to mainly form isocyanurate rings that have high heat resistance. However, such rings have three binding points that act to increase the cross-linking density, leading to poor toughness.

The matrix resin described in Patent document 2 tends to suffer deterioration and thickening due to hydrolysis peculiar to urethane bonds. In addition, since isocyanate is contained in an excessive amount, isocyanurate rings tend to be formed easily, and therefore, fiber-reinforced composite materials produced by using this material may contain very brittle portions, possibly leading to a deteriorated balance among mechanical properties.

The matrix resin described in Patent document 3 includes a largely excessive amount of isocyanate, and accordingly, a large number of isocyanurate rings are formed, resulting in a brittle cured product. Thus, it is impossible to obtain a fiber-reinforced composite material having high toughness and heat resistance.

Thus, the main object of the present invention is to eliminate the aforementioned defects in the conventional technologies and provide a resin composition that is high in toughness and heat resistance and a fiber-reinforced composite material produced therefrom.

MEANS OF SOLVING THE PROBLEMS

To meet the aforementioned object, the first embodiment of the molding method for a fiber-reinforced composite material according to the present invention provides a method for molding a fiber-reinforced composite material that at least contains a reinforcing fiber [A] and a cured product of an epoxy resin composition [B], wherein the epoxy resin composition [B] includes the components [a], [b], and [c] specified below, and a fiber-reinforced composite material is obtained by curing the epoxy resin composition [B] in such a manner that the absorbance ratio Da/(Da+Db) is in the range of 0.4 to 1:

   [a] an epoxy resin having at least two oxirane groups in the molecule,
   [b] an epoxy resin curing agent having at least two isocyanate groups in the molecule, and
   [c] a catalyst.

(Here, the above absorbance ratio is determined by performing FT-IR (ATR mode) analysis to measure the absorbance Da of the absorption attributed to the C=O double bond of the carboxyl group in the oxazolidone ring and the absorbance Db of the absorption attributed to the C=O double bond of the carboxyl group in the isocyanurate ring and calculating the absorbance ratio of Da/(Da+Db).)

The second embodiment of the molding method for a fiber-reinforced composite material provides a molding method for producing a fiber-reinforced composite material that at least contains a reinforcing fiber [A] and a cured product of an epoxy resin composition [B], wherein the epoxy resin composition [B] includes the components [a], [b], and [c] specified below, and a fiber-reinforced composite material is obtained by curing the epoxy resin composition [B] in such a manner that the relation between the rubbery state elastic modulus (Gr) and the glass transition temperature (Tg) satisfies the equation 1:

   [a] an epoxy resin having at least two oxirane groups in the molecule,
   [b] an epoxy resin curing agent having at least two isocyanate groups in the molecule, and
   [c] a catalyst.

$$Tg \geq 10 \times Gr + 120 \qquad \text{(equation 1)}$$

The first embodiment of the epoxy resin composition for a fiber-reinforced composite material provides an epoxy resin composition for a fiber-reinforced composite material, wherein the epoxy resin composition includes the components [a], [b], and [c] specified below and, in the course of curing thereof by raising the temperature from 30°C at a rate of 10°C/min, a specific degree of cure X such that the absorbance ratio Da/(Da+Db) at that degree of cure of X% is in the range of 0.4 to 1 is present in the range of 85% to 95%:

   [a] an epoxy resin having at least two oxirane groups in the molecule,
   [b] an epoxy resin curing agent having at least two isocyanate groups in the molecule, and

[c] a catalyst.

(Here, the degree of cure is determined from the total calorific value QT of the epoxy resin composition determined by DSC and the residual heat value QR of a cured product of the epoxy resin composition by the following equation: degree of cure (%) = (QT-QR) / QT × 100.) The second embodiment of the epoxy resin composition for a fiber-reinforced composite material provides an epoxy resin composition for a fiber-reinforced composite material, wherein the epoxy resin composition includes the components [a], [b], and [c] specified below and, in the course of curing thereof by raising the temperature from 30°C at a rate of 10°C/min, a specific degree of cure X such that the relation between the rubbery state elastic modulus (Gr) and the glass transition temperature (Tg) at that degree of cure X satisfies the equation 1 is present in the range of 85% to 95%:

[a] an epoxy resin having at least two oxirane groups in the molecule,
[b] an epoxy resin curing agent having at least two isocyanate groups in the molecule, and
[c] a catalyst.

$$Tg \geq 10 \times Gr + 120 \qquad \text{(equation 1)}$$

The present invention also provides cured products of such epoxy resin compositions and fiber-reinforced composite materials produced therefrom.

ADVANTAGEOUS EFFECTS OF THE INVENTION

According to the present invention, a fiber-reinforced composite material having high toughness and heat resistance can be produced without a deterioration in the balance among mechanical properties by using a thermosetting resin that cures while meeting specific conditions and using a molding method that realizes its curing under specific conditions.

DESCRIPTION OF PREFERRED EMBODIMENTS

Described in detail below are the molding method for a fiber-reinforced composite material and the epoxy resin composition for a fiber-reinforced composite material (hereinafter occasionally referred to as epoxy resin composition) according to the present invention.

An epoxy resin composition [B] is used in common in the first embodiment and the second embodiment of the molding method for a fiber-reinforced composite material according to the present invention. It is essential for such an epoxy resin composition to contain an epoxy resin having at least two oxirane groups in the molecule as the component [a], an epoxy resin curing agent having at least two isocyanate groups in the molecule as the component [b], and a catalyst as the component [c]. It is noted that when the term "the molding method for a fiber-reinforced composite material" is used without particularly distinguishing between the first embodiment and the second embodiment in the descriptions given hereafter, it is construed as referring to both the molding method for a fiber-reinforced composite material according to the first embodiment and that according to the second embodiment. (The same applies to the epoxy resin composition for a fiber-reinforced composite material.)

For the molding method for a fiber-reinforced composite material according to the present invention, the component [a] is an epoxy resin having at least two oxirane groups in the molecule. Having such a structure, it can develop mechanical properties and moldability characteristic of fiber-reinforced composite materials. In particular, an epoxy resin having a number average molecular weight in the range of 200 to 800 and containing an aromatic section in the backbone is used favorably as the component [a] because of having low viscosity and good impregnating property for impregnating reinforcing fibers and being able to form a fiber-reinforced composite material with good mechanical properties such as heat resistance and elastic modulus. Here, the number average molecular weight can be measured by GPC (gel permeation chromatography) using, for example, a polystyrene standard, but if the epoxy equivalent weight is known, a value calculated from the multiplication of the epoxy equivalent weight by the number of epoxy functional groups can also be used.

Examples of such an epoxy resin having at least two oxirane groups in the molecule useful for the molding method for a fiber-reinforced composite material according to the present invention include bisphenol type epoxy resin and amine type epoxy resin.

Examples of the bisphenol type epoxy resin useful for the molding method for a fiber-reinforced composite material according to the present invention include bisphenol A type epoxy resin, bisphenol F type epoxy resin, bisphenol AD type epoxy resin, and halogen-substituted, alkyl-substituted, or hydrogenated derivatives thereof. Of these, bisphenol F type epoxy resin is used favorably because of a good balance between high elastic modulus and high toughness. Specific examples of such bisphenol type epoxy resins include the following.

Commercial products of bisphenol A type epoxy resin include, for example, jER (registered trademark) 825, jER (registered trademark) 827, jER (registered trademark) 828 (all manufactured by Mitsubishi Chemical Corporation), EPICLON (registered trademark) 840, EPICLON (registered trademark) 850 (both manufactured by DIC Corporation), Epotohto (registered trademark) YD-128, Epotohto (registered trademark) YD-8125, Epotohto (registered trademark) YD-825GS (all manufactured by NIPPON STEEL Chemical & Material Co., Ltd.), DER (registered trademark) 331, and DER (registered trademark) 332 (both manufactured by The Dow Chemical Company).

Commercial products of bisphenol F type epoxy include, for example, jER (registered trademark) 806, jER (registered trademark) 807, jER (registered trademark) 4004P (all manufactured by Mitsubishi Chemical Corporation), EPICLON (registered trademark) 830 (manufactured by DIC Corporation), Epotohto (registered trademark) YD-170, Epotohto (registered trademark) YDF-8170C, and Epotohto (registered trademark) YDF-870GS (all manufactured by NIPPON STEEL Chemical & Material Co., Ltd.).

Commercial products of bisphenol AD type epoxy resin include, for example, EPOX-MK R710 and EPOX-MK R1710 (both manufactured by Printec, Inc.).

Examples of such an amine type epoxy resin used for the molding method for a fiber-reinforced composite material according to the present invention include tetraglycidyl diaminodiphenylmethane, tetraglycidyl diaminodiphenyl sulfone, triglycidyl aminophenol, triglycidyl aminocresol, diglycidyl aniline, diglycidyl toluidine, tetraglycidyl xylylenediamine, and halogen-substituted, alkyl-substituted, and hydrogenated derivatives thereof. Specific products of these epoxy resins include the following.

Commercial products of tetraglycidyl diaminodiphenylmethane include Sumiepoxy (registered trademark) ELM434 (manufactured by Sumitomo Chemical Co., Ltd.), YH434L (NIPPON STEEL Chemical & Material Co., Ltd.), jER (registered trademark) 604 (Mitsubishi Chemical Corporation), Araldite (registered trademark) MY720, and Araldite (registered trademark) MY721 (both manufactured by Huntsman Advanced Materials).

Commercial products of tetraglycidyl diaminodiphenyl sulfone include TG3DAS (manufactured by Mitsui Fine Chemical, Inc.).

Commercial products of triglycidyl aminophenol and triglycidyl aminocresol include Sumiepoxy (registered trademark) ELM100, Sumiepoxy (registered trademark) ELM120 (both manufactured by Sumitomo Chemical Co., Ltd.), Araldite (registered trademark) MY0500, Araldite (registered trademark) MY0510, Araldite (registered trademark) MY0600 (all manufactured by Huntsman Advanced Materials), and jER (registered trademark) 630 (manufactured by Mitsubishi Chemical Corporation).

Commercial products of glycidyl aniline include GAN (manufactured by Nippon Kayaku Co., Ltd.) and PxGAN (manufactured by Toray Fine Chemicals Co., Ltd.).

Commercial products of diglycidyl toluidine include GOT (manufactured by Nippon Kayaku Co., Ltd.)

Commercial products of tetraglycidyl xylylenediamines and hydrogenated derivatives thereof include TETRAD (registered trademark) -X and TETRAD (registered trademark) -C (both manufactured by Mitsubishi Gas Chemical Co., Inc.). In particular, tetraglycidyl diaminodiphenylmethane and triglycidyl diaminophenol are used favorably because of having both high elastic modulus and high heat resistance.

It is preferable for the component [a] to contain one or more amine type epoxy resins and/or one or more bisphenol type epoxy resins. It is also preferable to use a combination of an amine type epoxy resin and a bisphenol type epoxy resin from the viewpoint of improving the aforementioned balance among high elastic modulus, high heat resistance, and high toughness.

For the molding method for a fiber-reinforced composite material according to the present invention, the component [b] is an epoxy resin curing agent having at least two isocyanate groups in the molecule, and the isocyanate groups react mainly with the oxirane groups in the component [a] to form oxazolidone rings, which form rigid backbones that serve to develop high heat resistance. In particular, it is preferable to use a component [b] containing an aromatic section in the backbone because it serves to develop high heat resistance.

Examples of the epoxy resin curing agent having at least two isocyanate groups in the molecule used for the molding method for a fiber-reinforced composite material according to the present invention include aliphatic isocyanates such as methylene diisocyanate, ethylene diisocyanate, propylene diisocyanate, trimethylene diisocyanate, dodecamethylene diisocyanate, hexamethylene diisocyanate, tetramethylene diisocyanate, pentamethylene diisocyanate, propylene-1,2-diisocyanate, 2,3-dimethyltetramethylene diisocyanate, butylene-1,2-diisocyanate, butylene-1,3-diisocyanate, 1,4-diisocyanate hexane, cyclopentene-1,3-diisocyanate, isophorone diisocyanate, 1,2,3,4-tetraisocyanate butane, butane-1,2,3-triisocyanate, and $\alpha,\alpha,\alpha',\alpha'$-tetramethyl xylylene diisocyanate; aromatic isocyanates such as p-phenylene diisocyanate, 1-methylphenylene-2,4-diisocyanate, naphthalene-1,4-diisocyanate, tolylene diisocyanate, diphenyl-4,4-diisocyanate, benzene-1,2,4-triisocyanate, xylylene diisocyanate, diphenylmethane diisocyanate (MDI), diphenylpropane diisocyanate, tetramethylenexylene diisocyanate, and polymethylene polyphenyl polyisocyanate; alicyclic isocyanates such as cyclohexane diisocyanate, methylclohexane diisocyanate, trimethylhexamethylene diisocyanate, isophorone diisocyanate, lysine diisocyanate, methylene bis(4-cyclohexylisocyanate), and isopropylidene dicyclohexyl diisocyanate; and combinations of those listed above having structures in which they are connected by methylene groups etc. Here, these polyisocyanate compounds may be used singly or as a mixture of two or more thereof.

Commercial products of aliphatic isocyanate include HDI (manufactured by Tosoh Corporation), Duranate (registered trademark) D101, and Duranate (registered trademark) D201 (both manufactured by Asahi Kasei Corporation).

Commercial products of aromatic isocyanate include Lupranate (registered trademark) MS, Lupranate (registered trademark) MI, Lupranate (registered trademark) M20S, Lupranate (registered trademark) M11S, Lupranate (registered trademark) M5S, Lupranate (registered trademark) T-80, Lupranate (registered trademark) MM-103, Lupranate (registered trademark) MM-102, Lupranate (registered trademark) MM-301 (all manufactured by BASF INOAC Polyurethanes Ltd.), Millionate (registered trademark) MT, Millionate (registered trademark) MT-F, Millionate (registered trademark) MT-NBP, Millionate (registered trademark) NM, Millionate (registered trademark) MR-100, Millionate (registered trademark) MR-200, Millionate (registered trademark) MR-400, Coronate (registered trademark) T-80, Coronate (registered trademark) T-65, Coronate (registered trademark) T-100 (all manufactured by Tosoh Corporation), COSMONATE (registered trademark) PH, COSMONATE (registered trademark) M-50, and COSMONATE (registered trademark) T-80 (all manufactured by Mitsui Chemicals, Inc.).

Commercial products of alicyclic isocyanate include Takenate (registered trademark) 600 (manufactured by Mitsui Chemicals, Inc.) and FORTIMO (registered trademark) 1,4-H6XDI (manufactured by Mitsui Chemicals, Inc.).

It may be good to subject an epoxy resin and an epoxy resin curing agent to a preliminary reaction and mix the product into an epoxy resin composition. In some cases, this method can serve effectively for viscosity adjustment and storage stability improvement.

The component [c] used for the molding method for a fiber-reinforced composite material according to the present invention is a catalyst that can promote the curing reaction in which the oxirane groups contained in the component [a] and the isocyanate groups contained in the component [b] form oxazolidone rings. The inclusion of such a catalyst allows the curing reaction to progress under proper conditions and serves to promote the oxazolidone cyclization reaction preferentially over side reactions such as isocyanurate ring formation to produce a molecular structure that is rigid and low in cross-linking density, thereby making it possible to produce a molded product having high wet heat resistance and toughness.

There are no specific limitations on the catalyst to be used for the molding method for a fiber-reinforced composite material according to the present invention, but preferred ones include basic catalysts, salts formed from a Broensted acid and a base, and onium salts containing in which the anion is a halide. More preferable ones include amines, derivatives thereof, ammonium salts, imidazoles, derivatives thereof, and imidazolium salts. These catalysts may be used singly or as a combination of two or more thereof.

In addition to using an epoxy resin composition [B] as described above, the first embodiment for the molding method for a fiber-reinforced composite material according to the present invention requires that the epoxy resin composition [B] be cured to form a fiber-reinforced composite material in such a manner that the absorbance ratio Da/(Da+Db) is within the range of 0.4 to 1.

If the absorbance ratio Da/(Da+Db) is in the range of 0.4 to 1, preferably in the range of 0.5 to 1, and more preferably in the range of 0.7 to 1, it serves to form a structure having a low cross-linking density while maintaining heat resistance, thereby providing a cured product with high toughness. If the absorbance ratio Da/(Da+Db) is less than 0.4, the cross-linking density will be too high and the resulting fiber-reinforced composite material will have decreased strength and toughness. Here, an absorbance ratio Da/(Da+Db) closer to 1 is more desirable because it ensures a lower cross-linking density and a higher heat resistance.

Here, the absorbance ratio is determined by analyzing a cured product of the epoxy resin composition by FT-IR in the attenuated total reflection mode (hereinafter occasionally referred to simply as ATR mode) to measure the absorbance Da of the absorption attributed to the C=O double bond of the carboxyl group in the oxazolidone ring and the absorbance Db of the absorption attributed to the C=O double bond of the carboxyl group in the isocyanurate ring and calculating the absorbance ratio of Da/(Da+Db). For example, as 32 measuring runs are performed by FT-IR (ATR mode) at a resolution of 4 cm$^{-1}$, the absorbance of the absorption near 1,760 cm$^{-1}$ is measured as Da while the absorbance of the absorption near 1,710 cm$^{-1}$ is measured as Db, which are then used for calculation.

According to the first embodiment for the molding method for a fiber-reinforced composite material according to the present invention, it is preferable that curing be carried out in such a manner that the absorbance ratio Da/(Da+Db) is in the range of 0.01 to 1 when the epoxy resin composition [B] is at a specific degree of cure in the degree-of-cure range of 15% to 25%. Specifically, according to the first embodiment for the molding method for a fiber-reinforced composite material of the present invention, it is preferable that curing be carried out in such a manner that the absorbance ratio Da/(Da+Db) is in the range of 0.01 to 1 when the degree of cure is at a specific value (for example, at a degree of cure of 20%) in the degree-of-cure range of 15% to 25%.

If the epoxy resin composition [B] has an absorbance ratio Da/(Da+Db) in the range of 0.01 to 1, preferably in the range of 0.05 to 1, and more preferably in the range of 0.1 to 1, at a specific degree of cure in the degree-of-cure range of 15% to 25%, the oxazolidone ring formation occurs preferentially over the isocyanurate ring formation, which means that it becomes possible to suppress reactions that work to increase the cross-linking density and also that a rapid viscosity increase can be prevented from occurring in the initial part of the curing. If the epoxy resin composition [B] has an absorbance ratio Da/(Da+Db) of less than 0.01 at a specific degree of cure in the degree-of-cure range of 15% to 25%, a structure with high heat resistance may be expected to form, but it will only result in a brittle fiber-reinforced composite material. In addition, it will fail to have a sufficient viscosity, possibly leading to a deteriorated surface quality.

Here, the degree of cure described here is determined from the total heat value QT of the epoxy resin composition [B] measured by differential scanning calorimetry (DSC) and the residual heat value QR of a cured product of the epoxy resin composition [B] by the following equation: degree of cure (%) = (QT-QR) / QT × 100. For example, DSC is performed by heating over the temperature range from 30°C to 350°C at a temperature ramp rate of 10°C/min to determine the total heat value of the epoxy resin composition [B], and a cured product of the epoxy resin composition [B] is examined to determine the residual heat value, which are used as QT and QR, respectively, in the above calculation.

For the second embodiment of the molding method for a fiber-reinforced composite material according to the present invention, it is essential to adopt an epoxy resin composition [B] as used for the first embodiment and cure this epoxy resin composition [B] into a fiber-reinforced composite material in such a manner that the relation between the rubbery state elastic modulus (Gr) and the glass transition temperature (Tg) satisfies the equation 1.

As described above, while being cured, the oxazolidone ring formation occurs preferentially to form a molecular structure that is rigid and low in cross-linking density, and this allows the relation between Gr and Tg to satisfy the equation 1, preferably the equation 1a, and more preferably the equation 1b. As a result, it becomes possible to obtain a cured product and a fiber-reinforced composite material that has high heat resistance and high toughness. If the relation between Gr and Tg does not satisfy the equation 1, the resulting fiber-reinforced composite material will fail to have a good balance between heat resistance and toughness. It is preferable that the relation between Gr and Tg also satisfy the equation 1'.

$$Tg \geq 10 \times Gr + 120 \qquad \text{(equation 1)}$$

$$Tg \geq 10 \times Gr + 140 \qquad \text{(equation 1a)}$$

$$Tg \geq 10 \times Gr + 160 \qquad \text{(equation 1b)}$$

$$Tg \geq 10 \times Gr + 230 \qquad \text{(equation 1')}$$

For the second embodiment of the molding method for a fiber-reinforced composite material according to the present invention, it is preferable that the epoxy resin composition [B] be cured into a fiber-reinforced composite material in such a manner that the rubbery state elastic modulus (Gr) satisfies the equation 2.

If Gr satisfies the equation 2, preferably the equation 2a, and more preferably the equation 2b, it is possible to form a structure with a low cross-linking density and obtain a cured product with a high toughness. If Gr does not satisfy the equation 2, the resulting fiber-reinforced composite material may fail to have a sufficient toughness.

$$0.5 \leq Gr \leq 15 \qquad \text{(equation 2)}$$

$$0.5 \leq Gr \leq 10 \qquad \text{(equation 2a)}$$

$$0.5 \leq Gr \leq 5 \qquad \text{(equation 2b)}$$

To determine the glass transition temperature, cured epoxy resin is examined using a differential scanning calorimeter in which it is heated from 30°C to 350°C at a temperature ramp rate of 10°C/min, and the midpoint temperature determined according to JIS K7121 (1987) is adopted.

Here, the rubbery state elastic modulus is a value measured as described below. Specifically, an epoxy resin composition is heated and cured to prepare a plate with a thickness of about 2 mm, which is cut to provide a test piece with a width of 12±1 mm and a length of 30 to 40 mm and subjected to dynamic viscoelasticity measurement at a temperature ramp rate of 5°C/min using a dynamic viscoelasticity measuring instrument. The rubbery state elastic modulus is defined as the storage modulus at a temperature that is higher by 50°C than the glass transition temperature determined by the dynamic viscoelasticity measurement. Here, the glass transition temperature determined by the dynamic viscoelasticity measurement is the temperature where the tangent drawn to the temperature-storage modulus curve in the glass region and the tangent drawn thereto in the glass transition region intersect each other.

In the molding method for a fiber-reinforced composite material according to the present invention, it is preferable that the epoxy resin composition [B] be cured into a fiber-reinforced composite material in such a manner that the mass decrease rate ΔWr measured by thermogravimetric analysis (TGA) is in the range of 10% or less.

Here, to determine the mass decrease rate, thermogravimetric analysis is performed by heating a specimen from 50°C to a temperature of 800°C at a temperature ramp rate of 10°C/min under ordinary pressure in a non-oxidizing atmosphere while measuring the mass W1 of the specimen reaching 70°C and the mass W2 of the specimen reaching 320°C, which are then used for calculation by the following equation: mass decrease rate ΔWr (%) = (W1-W2) / W1 × 100. The value of ΔWr can be measured by a common procedure for thermogravimetric analysis, and this analysis is performed under ordinary pressure in a non-oxidizing atmosphere. Such a non-oxidizing atmosphere is an atmosphere that is substantially free of oxygen, and more specifically, it is an atmosphere of an inert gas such as nitrogen, helium, and argon. If ΔWr is more than 10, it may not be possible, for example, to produce a fiber-reinforced composite material having a sufficient heat resistance and compression strength under wet heat conditions.

For the molding method for a fiber-reinforced composite material according to the present invention, the epoxy resin composition [B] to be used is characterized by a small initial viscosity increase, a long injectable time, and quick curing. Therefore, although it is most suitable for a RTM process in which a constant mold temperature is maintained from injection to demolding, it can also be applied to a RTM process in which the resin is cured by heating after injection and all other non-RTM processes for liquid thermosetting resins including hand lay-up, pultrusion, and filament winding, and in any of these molding processes, it serves to achieve a shortened molding time and improve the impregnating property for impregnating reinforcing fibers.

To illustrate the molding method for a fiber-reinforced composite material according to the present invention in more detail focusing on the RTM method, the aforementioned epoxy resin composition [B] is injected into a base material containing a reinforcing fiber [A] that is placed in a die heated at 100°C to 200°C, thereby realizing impregnation and curing in the die.

In this molding method, the epoxy resin composition [B] before injection is preferably heated at a constant temperature, and a suitable heating temperature is determined based on the relation between the initial viscosity and the viscosity increase rate of the epoxy resin composition [B] while taking into consideration its impregnating property in impregnating the base material containing the reinforcing fiber [A], and it is preferably 30°C to 80°C and more preferably 40°C to 70°C.

Here, the molding temperature for a fiber-reinforced composite material (i.e., the heat-curing temperature for the epoxy resin composition [B]) can be controlled by heating the die, and the temperature of the heated die is preferably in the range of 100°C to 200°C and more preferably in the range of 120°C to 180°C. If the molding temperature for a fiber-reinforced composite material is in the above range, it serves to shorten the time required for curing while preventing a rapid viscosity increase from occurring in the initial part of the curing period of the epoxy resin composition [B], i.e., the matrix resin for the resulting fiber-reinforced composite material, and in addition, the heat shrinkage that may occur after demolding the fiber-reinforced composite material is decreased, thereby making it possible to provide a fiber-reinforced composite material having high surface quality. Furthermore, the epoxy resin composition [B] forms a cured product with a higher absorbance ratio Da/(Da+Db) while suffering a smaller ΔWr, serving to provide a fiber-reinforced composite material having a better balance between toughness and heat resistance.

For this molding method for a fiber-reinforced composite material, it is also preferable that when the epoxy resin composition [B] is injected into a base material containing the reinforcing fiber [A] placed in a molding die, the resin be injected through a plurality of ports provided in the die. Specifically, it is preferable to use a molding die having a plurality of ports and adopt appropriate conditions suitable for the intended fiber-reinforced composite material such as injecting the epoxy resin composition [B] through a plurality of ports simultaneously or sequentially at different times in order to ensure a higher degree of freedom in forming various molded articles that differ in shape or size. Although the number and shape of these ports are not particularly limited, the use of a larger number of ports is more desirable to realize a shorter injection time, and it is preferable for them to be properly located to suit the shape of the intended molded article and minimize the flow length.

The injection pressure used for the injection of the epoxy resin composition [B] is commonly 0.1 to 1.0 MPa and preferably 0.1 to 0.6 MPa from the viewpoint of the injection time and equipment cost. Furthermore, it may also be useful to adopt the VaRTM (vacuum-assisted resin transfer molding) technique, which is intended to evacuate the die to assist the injection of the epoxy resin composition [B]. When pressurized injection is performed as well, it is desirable to evacuate the die before injecting the epoxy resin composition [B] because it serves to inhibit the formation of voids.

For the molding method for a fiber-reinforced composite material according to the present invention, preferable materials for the reinforcing fiber [A] include glass fiber, aramid fiber, carbon fiber, and boron fiber. Carbon fiber can be used suitably because it serves to produce a fiber-reinforced composite material having good mechanical properties such as high strength and modulus in spite of light weight.

As the carbon fiber to use, various types of carbon fibers are available for different purposes, but from the viewpoint of impact resistance, it is preferable to adopt a carbon fiber that has a tensile modulus of not more than 400 GPa. From the viewpoint of strength, the use of a carbon fiber having a tensile strength of 4.4 or more and 6.5 GPa or less is preferable because a composite material with high rigidity and high mechanical strength can be produced. Tensile elongation is also an important factor, and it is preferable to use a high-strength, high-elongation carbon fiber having a tensile elongation of 1.7% or more and 2.3% or less. Particular suitable are carbon fibers that are characterized by simultaneously having a tensile modulus of at least 230 GPa, a tensile strength of at least 4.4 GPa, and a tensile elongation of at least 1.7%.

The reinforcing fibers [A] may be either short fibers or continuous fibers or a combination thereof. The use of continuous fibers is preferable to produce a high-Vf fiber-reinforced composite material.

For the molding method for a fiber-reinforced composite material according to the present invention, the reinforcing fiber [A] may be in the form of strands, but it is preferred to use a base material that contains, as the reinforcing fiber [A], fibers in the form of a mat, woven fabric, knit fabric, braid, or unidirectional sheet. Of these, woven fabrics can be suitably used because they are useful for easy production of a high-Vf fiber-reinforced composite material and high in handleability as well.

The filling factor of a woven fabric is defined as the ratio of the net volume of the reinforcing fiber [A] to the apparent volume of the woven fabric. The filling factor of a woven fabric is calculated as $W/(1,000 \cdot t \cdot \rho f)$ where $W$ (in $g/m^2$) is the areal weight, $t$ (in mm) the thickness, and $pf$ (in $g/cm^3$) the density of the reinforcing fiber. The areal weight and thickness of a woven fabric is determined according to JIS R7602 (1995). Since a woven fabric with a higher filling factor serves to produce a fiber-reinforced composite material with a higher Vf, the filling factor of a woven fabric is preferably in the range of 0.10 to 0.85, more preferably 0.40 to 0.85, and still more preferably 0.50 to 0.85.

To produce a fiber-reinforced composite material with a high specific strength or a high specific elastic modulus by the molding method for a fiber-reinforced composite material according to the present invention, its fiber volume fraction Vf is preferably in the range of 40% to 85% and more preferably 45% to 85%. Here, the fiber volume fraction Vf of a fiber-reinforced composite material referred to herein is determined as described below according to ASTM D3171 (1999), and the test piece to be used is prepared by injecting the thermosetting resin [B] into a base material containing the reinforcing fiber [A] and curing it. Specifically, the fiber volume fraction Vf of a fiber-reinforced composite material can be calculated by the following equation from the thickness h etc. of the fiber-reinforced composite material.

$$Vf\ (\%) = (Af \times N) / (\rho f \times h) / 10$$

Af: mass per $m^2$ of a sheet of the base material containing the reinforcing fiber [A] ($g/m^2$)
N: number of stacked sheets of the base material containing the reinforcing fiber [A] (number)
pf: density of the reinforcing fiber [A] ($g/cm^3$)
h: thickness of fiber-reinforced composite material (test piece) (mm)

To examine a fiber-reinforced composite material to determine the mass per $m^2$ of a sheet of the base material containing the reinforcing fiber [A], Af, the number of stacked sheets of the base material containing the reinforcing fiber [A], N, and the density of the reinforcing fiber [A], pf, the base material containing the reinforcing fiber [A] is separated and removed by any of the combustion method, the nitric acid decomposition method, and the sulfuric acid decomposition method specified in JIS K7075 (1991). The density of the reinforcing fiber [A] used here is measured according to JIS R7603 (1999).

The thickness of a fiber-reinforced composite material, h, is preferably measured using a micrometer as specified in JIS B7502 (1994) or a tool that is comparable or high in accuracy, as described in JIS K7072 (1991). In the case of a fiber-reinforced composite material that is so complicated in shape that it is difficult to take measurements, a sample (a sample having a certain shape and size suitable for measurement) may be cut out of the fiber-reinforced composite material and used for measurement.

The fiber-reinforced composite material to be produced by the molding method for a fiber-reinforced composite material according to the present invention is preferably in the form of a single plate as one of the various preferred forms. Such other preferred forms include a sandwich structural body composed single plate-like fiber-reinforced composite materials attached to both surfaces of a core material, a hollow structural body surrounded by single plate-like structural bodies, and a so-called canape structural body containing single plate-like fiber-reinforced composite materials attached to one surface of a core material.

The core materials of the sandwich structural body and canape structural body maybe a honeycomb core made of aluminum, aramid, etc., a foam core of polyurethane, polystyrene, polyamide, polyimide, polyvinyl chloride, phenol resin, acrylic resin, epoxy resin, etc., or others including wood such as balsa. In particular, a foam core is suitably used as the core material because a lightweight fiber-reinforced composite material can be obtained.

It is essential for the epoxy resin composition for a fiber-reinforced composite material according to the present invention to contain an epoxy resin having at least two oxirane groups in the molecule as the component [a], an epoxy resin curing agent having at least two isocyanate groups in the molecule as the component [b], and a catalyst as the component [c].

The component [a] of the epoxy resin composition for a fiber-reinforced composite material according to the present invention is an epoxy resin having at least two oxirane groups in the molecule, and the preferable resins therefor are the same as listed above for the molding method for a fiber-reinforced composite material according to the present invention.

The component [b] of the epoxy resin composition for a fiber-reinforced composite material according to the present invention is an epoxy resin curing agent that contains a compound having at least two isocyanate groups in the molecule and an active group that can react with the oxirane groups in the component [a], and the preferable substances therefor are the same as listed above for the molding method for a fiber-reinforced composite material according to the present invention.

For the epoxy resin composition for a fiber-reinforced composite material according to the present invention, it is preferable that the ratio of the number of moles of the isocyanate groups in the component [b] to the total number of moles of the oxirane groups in all epoxy resins contained in the epoxy resin composition be adjusted to 0.5 to 1.8, more preferably 0.8 to 1.5, still more preferably 0.8 to 1.1, and still more preferably 0.95 to 1.05. If the ratio of the number of moles of the isocyanate groups to the total number of moles of oxirane groups in all epoxy resins contained in the epoxy resin composition according to the present invention is less than 0.5, it may work to accelerate the self-polymerizaion of the oxirane groups in the component [a], possibly leading to an insufficient heat resistance. On the other hand, if the ratio is more than 1.8, it will easily lead to a high cross-linking density, and it can result in an insufficient resin elongation percentage. If isocyanate groups with high reactivity are present excessively, furthermore, side reactions will tend to occur easily, leading to a risk of void formation in the epoxy cured resin in some cases.

The component [c] of the epoxy resin composition for a fiber-reinforced composite material according to the present invention is a catalyst that can promote the curing reaction involving the oxirane groups contained in the component [a] and the isocyanate groups contained in the component [b]. The preferred substances for the component [c] of the epoxy resin composition are the same as listed above for the molding method for a fiber-reinforced composite material according to the present invention.

The component [c] is preferably a salt of a Broensted base having a base dissociation constant pKb of 20 or more in acetonitrile and a Broensted acid. The component [c] is more preferably a salt of a Broensted base having a pKb of 24 or more and a Broensted acid, still more preferably a salt of a Broensted base having a pKb of 25 or more and a Broensted acid, and particularly preferably a salt of a Broensted base having a pKb of 26 or more and a Broensted acid. The inclusion of the component [c] serves to develop a high reactivity and reaction selectivity. The use of a salt of a Broensted base and a Broensted acid may possibly leads to a long curing time and to a lower productivity, when the pKb of the Broensted base is less than 20.

The base dissociation constant described here is a value determined by first calculating the equilibrium constant as $Kb = c(SH^+) \times c(B) / c(BH^+)$ from the concentration $c(B)$ of the base in the solvent, the concentration $c(BH^+)$ of the conjugated acid of the base, and the concentration $c(SH^+)$ of the protonated solvent, and calculating the base dissociation constant as $pKb = -log_{10}Kb$.

The base dissociation constant in acetonitrile can be determined by, for example, dissolving the base in acetonitrile, titrating it with an acid, and analyzing its spectrum obtained by visible-ultraviolet spectroscopy.

There are no particular limitations on the Broensted base as long as it is a base that can accept protons in a neutralization reaction with an acid, but it is preferably at least one selected from the group consisting of amine compounds and imidazole compounds.

Examples of the Broensted base include amine compounds such as 1,8-diazabicyclo[5.4.0]undeca-7-ene, 1,5-diazabicyclo[4.3.0]-5-nonene, 7-methyl-1,5,7-triazabicyclo[4.4.0] deca-5-ene, 1,5,7-triazabicyclo[4.4.0]deca-5-ene, and imidazole compounds such as imidazole (melting point 89°C), 2-ethylimidazole (melting point 80°C), 2-undecylimidazole (melting point 72°C), 2-heptadecylimidazole (melting point 89°C), 1,2-dimethylimidazole (liquid at room temperature), 2-ethyl-4-methylimidazole (liquid at room temperature), 1-benzyl-2-phenylimidazole (liquid at room temperature), 1-benzyl-2-methylimidazole (liquid at room temperature), and 1-cyanoethyl-2-methylimidazole (liquid at room temperature).

For such a salt of a Broensted base having a base dissociation constant pKb of 20 or more in acetonitrile and a Broensted acid, there are no particular limitations on the Broensted acid as long as it delivers protons in a neutralization reaction with the base, but it preferably has an acid dissociation constant pKa in water of 5 or less, more preferably 3 or less, still more preferably 1.5 or less, and particularly preferably 0 or less. If it is more than 5, it acts to preferentially accelerate reactions that are likely to cause a high cross-linking density, and this will possibly result in a cured product and a fiber-reinforced composite material that are brittle. The Broensted base is preferably at least one selected from the group consisting of carboxylic acids, sulfonic acids, and hydrogen halides.

The acid dissociation constant described here is a value determined by first calculating the equilibrium constant as $Ka = c(H_3O^+) \times c(A^-)/c(AH)$ from the concentration $c(AH)$ of the acid A in a dilute aqueous solution, the concentration $c(A^-)$ of the conjugated base of the acid A, and the hydrogen ion concentration $c(H_3O^+)$, and calculating the acid dissociation constant as $pKa = -\log_{10}Ka$.

The acid dissociation constant can be determined by, for example, measuring the hydrogen ion concentration with a pH meter and calculating it from the concentration of the relevant substance and the hydrogen ion concentration.

Such useful carboxylic acids include, for example, formic acid, acetic acid, oxalic acid, benzoic acid, phthalic acid, maleic acid, fumaric acid, malonic acid, tartaric acid, citric acid, lactic acid, succinic acid, monochloroacetic acid, dichloroacetic acid, trichloroacetic acid, trifluoroacetic acid, nitroacetic acid, and triphenylacetic acid.

Such useful sulfonic acids include, for example, methanesulfonic acid, ethanesulfonic acid, benzenesulfonic acid, p-toluenesulfonic acid, and trifluoromethanesulfonic acid.

Such useful hydrogen halides include, for example, hydrogen chloride, hydrogen bromide, and hydrogen iodide.

The use of the component [c] is preferred because it contains an onium salt in which the anion is a halide, which also acts to develop a high reactivity and reaction selectivity. Such useful onium salts include quaternary ammonium salts and quaternary phosphonium salts.

Examples of such a halogenated quaternary ammonium include trimethyloctadecylammonium chloride, trimethyloctadecylammonium bromide, benzyltrimethylammonium chloride, benzyltrimethylammonium bromide, tetrabutylammonium chloride, tetrabutylammonium bromide, (2-methoxyethoxymethyl)triethylammonium chloride, (2-methoxyethoxymethyl)triethylammonium bromide, (2-acetoxyethyl)trimethylammonium chloride, (2-acetoxyethyl)trimethylammonium bromide, (2-hydroxyethyl)trimethylammonium chloride, (2-hydroxyethyl)trimethylammonium bromide, bis(polyoxyethylene)dimethylammonium chloride, bis(polyoxyethylene)dimethylammonium bromide, 1-hexadecylpyridinium chloride, and 1-hexadecylpyridinium bromide.

Examples of such a halogenated quaternary phosphonium include trimethyloctadecylphosphonium chloride, trimethyloctadecylphosphonium bromide, benzyltrimethylphosphonium chloride, benzyltrimethylphosphonium bromide, tetrabutylphosphonium chloride, tetrabutylphosphonium bromide, (2-methoxyethoxymethyl)triethylphosphonium chloride, (2-methoxyethoxymethyl)triethylphosphonium bromide, (2-acetoxyethyl)trimethylphosphonium chloride, (2-acetoxyethyl)trimethylphosphonium bromide, (2-hydroxyethyl)trimethylphosphonium chloride, (2-hydroxyethyl)trimethylphosphonium bromide, bis(polyoxyethylene)dimethylphosphonium chloride, bis(polyoxyethylene)dimethylphosphonium bromide, tetraphenylphosphonium bromide, acetonyltriphenylphosphonium chloride, (4-carboxybutyl)triphenylphosphonium bromide, (4-carboxypropyl)triphenylphosphonium bromide, (2,4-dichlorobenzyl)triphenylphosphonium chloride, 2-dimethylaminoethyltriphenylphosphonium bromide, ethoxycarbonylmethyl(triphenyl)phosphonium bromide, (formylmethyl)triphenylphosphonium chloride, N-methylanilinotriphenylphosphonium iodide, and phenacyltriphenylphosphonium bromide.

The total quantity of the component [c] preferably accounts for 1 part by mass or more and 10 parts by mass or less, more preferably 1 part by mass or more and 5 parts by mass or less, and still more preferably 1 part by mass or more and 3 parts by mass or less, relative to the total quantity, i.e. 100 parts by mass, of the component [a]. If the content is less than 1 part by mass, it can possibly lead a longer curing time and a lower productivity. If it is more than 10 parts by mass, on the other hand, the oxirane groups contained in the component [a] may undergo self-polymerizaion, possibly leading to an insufficient heat resistance.

To ensure uniform catalyst action in the curing process, the component [c] is preferably a catalyst that is soluble in the epoxy resin in the component [a]. The expression "a catalyst that is soluble in the epoxy resin in the component [a]" means that when 1 part by mass of the catalyst relative to the total quantity, i.e. 100 parts by mass, of the component [a] is added to the epoxy resin in the component [a], kneaded at 200 rpm for 30 minutes at room temperature or after heating to near the melting point of the catalyst, and left to stand at room temperature for 1 hour, they mix with each other uniformly. To examine whether they mix with each other uniformly, observation is made by phase contrast microscopy to check for an insoluble component of the catalyst.

In addition to using the components [a] to [c] in the epoxy resin composition [B] described above, the first embodiment of the epoxy resin composition for a fiber-reinforced composite material according to the present invention requires as a requisite that in the course of curing thereof by raising the temperature from 30°C at a rate of 10°C/min, a specific degree of cure X such that the absorbance ratio Da/(Da+Db) at that degree of cure X is in the range of 0.4 to 1 be present in the range of 85% to 95%. Specifically, for the first embodiment of the epoxy resin composition for a fiber-reinforced composite material according to the present invention, it is essential that in the course of curing thereof by raising the temperature from 30°C at a rate of 10°C/min, the absorbance ratio Da/(Da+Db) be in the range of 0.4 to 1 when the degree of cure X is at a certain point in the range of 85% to 95% (for example, at a degree of cure of 90%). Here, the absorbance ratio Da/(Da+Db) referred to here is as described previously. Specifically, it is determined by analyzing a cured product of the epoxy resin composition by FT-IR in the ATR mode to measure the absorbance Da of the absorption attributed to the C=O double bond of the carboxyl group in the oxazolidone ring and the absorbance Db of the absorption attributed to the C=O double bond of the carboxyl group in the isocyanurate ring and calculating the absorbance ratio of Da/(Da+Db). For example, as 32 measuring runs are performed by FT-IR (ATR mode) at a resolution of 4 cm$^{-1}$, the absorbance of the absorption near 1,760 cm$^{-1}$ is measured as Da while the absorbance of the absorption near 1,710 cm$^{-1}$ is measured as Db, which are then used for calculation. Then, the degree of cure is determined from the total heat value QT of the epoxy resin composition measured by DSC performed at a temperature ramp rate of 10°C/min and the residual heat value QR of the cured product thereof by the following equation: degree of cure (%) = (QT-QR) / QT $\times$ 100.

If the absorbance ratio Da/(Da+Db) at the specific degree of cure X is in the range of 0.4 to 1, preferably in the range of 0.5 to 1, and more preferably in the range of 0.7 to 1, it serves to form a structure having a low cross-linking density while maintaining an appropriate heat resistance, thus leading to a high toughness. If the absorbance ratio Da/(Da+Db) at the specific degree of cure X is less than 0.4, the cross-linking density will be too high and the cured product of the epoxy resin composition will be low in strength and toughness. Here, it is preferable for the absorbance ratio Da/(Da+Db) to be as close to 1 as possible because it ensures a lower cross-linking density and a higher strength and toughness.

For the first embodiment of the epoxy resin composition for a fiber-reinforced composite material according to the present invention, it is preferable that when the epoxy resin composition is cured by raising the temperature from 30°C at a rate of 10°C/min, a specific degree of cure Y such that the absorbance ratio Da/(Da+Db) at that degree of cure Y is in the range of 0.01 to 1 be present in the range of 15% to 25%. Specifically, for the first embodiment of the epoxy resin composition for a fiber-reinforced composite material according to the present invention, it is preferable that in the course of curing thereof by raising the temperature from 30°C at a rate of 10°C/min, the absorbance ratio Da/(Da+Db) be in the range of 0.01 to 1 when the degree of cure is at a certain point in the range of 15% to 25% (for example, at a degree of cure of 20%).

If the absorbance ratio Da/(Da+Db) at the specific degree of cure Y is in the range of 0.01 to 1, preferably in the range of 0.05 to 1, and more preferably in the range of 0.1 to 1, it serves to suppress preceding reactions that work to increase the cross-linking density and also can prevent a rapid viscosity increase from occurring in the initial part of the curing. If the absorbance ratio Da/(Da+Db) at the specific degree of cure Y is less than 0.01, a structure with high heat resistance may be expected to form, but it will only result in a brittle fiber-reinforced composite material. In addition, it will fail to have a sufficient viscosity, possibly leading to a deteriorated surface quality.

For the second embodiment of the epoxy resin composition for a fiber-reinforced composite material according to the present invention, it is essential that when the epoxy resin composition [B] as used for the first embodiment is cured by raising the temperature from 30°C at a rate of 10°C/min, a specific degree of cure X such that the relation between the rubbery state elastic modulus (Gr) and the glass transition temperature (Tg) at the degree of cure X satisfies the equation 1 is present in the range of 85% to 95%.

While being cured, the oxazolidone ring formation occurs preferentially to form a molecular structure that is rigid and low in cross-linking density, and this allows the relation between Gr and Tg to satisfy the equation 1, preferably the equation 1a, and more preferably the equation 1b. As a result, it becomes possible to obtain a cured product and a fiber-reinforced composite material that have high heat resistance and high toughness. If the relation between Gr and Tg does not satisfy the equation 1, the resulting fiber-reinforced composite material will fail to have a good balance between heat resistance and toughness. It is preferable that the relation between Gr and Tg also satisfy the equation 1'.

$$Tg \geq 10 \times Gr + 120 \qquad \text{(equation 1)}$$

$$Tg \geq 10 \times Gr + 140 \qquad \text{(equation 1a)}$$

$$Tg \geq 10 \times Gr + 160 \qquad \text{(equation 1b)}$$

$$Tg \geq 10 \times Gr + 230 \qquad \text{(equation 1')}$$

Furthermore, for the second embodiment of the epoxy resin composition for a fiber-reinforced composite material according to the present invention, it is preferable that in the course of curing thereof by raising the temperature from 30°C at a rate of 10°C/min, a specific degree of cure X such that the rubbery state elastic modulus at the degree of cure X is in the range of 0.5 to 15 MPa be present in the range of 85% to 95%, and it is more preferable that a specific degree of cure X such that the rubbery state elastic modulus at the degree of cure X is in the range of 0.5 to 10 MPa be present in the range of 85% to 95%. Specifically, for the second embodiment of the epoxy resin composition for a fiber-reinforced composite material according to the present invention, it is preferable that in the course of curing thereof by raising the temperature from 30°C at a rate of 10°C/min, the rubbery state elastic modulus be in the range of 0.5 to 15 when the degree of cure is at a certain point in the range of 85% to 95% (for example, at a degree of cure of 90%).

If the rubbery state elastic modulus at the specific degree of cure X is in the range of 0.5 to 15 MPa, it means that a rigid backbone has been formed and at the same time the cross-linking density is being controlled appropriately, thereby leading to a matrix resin that is high in both heat resistance and toughness. If the rubbery state elastic modulus at the specific degree of cure X is less than 0.5 MPa, the cross-linking density of the molecular chains will be too low, leading to a fiber-reinforced composite material having a low heat resistance. Furthermore, if the rubbery state elastic modulus at the specific degree of cure X is more than 15 MPa, the cross-linking density will be too high to realize a desired resin elongation percentage, leading to a fiber-reinforced composite material having an insufficient toughness.

Here, the rubbery state elastic modulus referred to here is a value measured as described below. Specifically, an epoxy resin composition is heated and cured to provide a plate with a thickness of about 2 mm, which is cut to provide a test piece with a width of $12 \pm 1$ mm and a length of 30 to 40 mm and subjected to dynamic viscoelasticity measurement at a temperature ramp rate of 5°C/min using a dynamic viscoelasticity measuring apparatus. The rubbery state elastic modulus is defined as the storage modulus at a temperature that is higher by 50°C than the glass transition temperature determined by the dynamic viscoelasticity measurement. Here, the glass transition temperature determined by the dynamic viscoelasticity measurement is the temperature where the tangent drawn to the temperature-storage modulus curve in the glass region and the tangent drawn thereto in the glass transition region intersect each other.

As a preferred embodiment of the epoxy resin composition for a fiber-reinforced composite material according to the present invention, when representing the content of the hydroxyl group in terms of the number of moles in 1 kg of the epoxy resin composition, the content of the hydroxyl group in the epoxy resin composition is preferably 0.20 mol/kg or less, more preferably 0.17 mol/kg or less, still more preferably 0.13 mol/kg or less, still more preferably 0.09 mol/kg or less, still more preferably 0.06 mol/kg or less, and still more preferably 0.03 mol/kg or less. If the content of the hydroxyl group in the epoxy resin composition is more than 0.20 mol/kg, a reaction between the isocyanate group and the hydroxyl group in the composition progresses to form urethane bonds, leading to a large decrease in the heat resistance. Such a reaction tends to progress easily at low temperatures and cause deterioration in storage stability during storage.

Here, the content of the hydroxyl group in the epoxy resin composition is calculated by the following equation 3 from the hydroxyl group equivalent weight of each compound in each component. Here, if the epoxy resin composition for a fiber-reinforced composite material according to the present invention contains a component other than the components [a] to [c] and also if that component contains a hydroxyl group (a particulate component such as filler and filling material is regarded as a hydroxyl group-containing component if it has a hydroxyl group at the surface), that component is combined with the above components and included in the calculation by the following equation.

$$COH = (\Sigma(wn/wnOH)) / W \times 1000 \qquad \text{(equation 3)}$$

COH: hydroxyl group content in epoxy resin composition (mol/kg)
wn: number of parts by mass of each component
wnOH: hydroxyl group equivalent weight of each component (g/eq)
W: total number of parts by mass of all components

For each component, the hydroxyl group equivalent weight means the inverse of the quotient of the hydroxyl value measured by the pyridine-acetyl chloride method specified in JIS K 0070 (1992) (the quantity in mg of potassium hydroxide required to neutralize the acetic acid bonded to hydroxyl groups when 1 g of a specimen is acetylated, which is represented in mgKOH/g) divided by the formula weight of potassium hydroxide (56.11), which corresponds to the molecular weight per hydroxyl group (in g/eq). Specifically, the procedure of the pyridine-acetyl chloride method, which is designed to measure the hydroxyl group equivalent weight of an epoxy resin, is to dissolve a specimen under measurement in pyridine (disperse the specimen therein when it is in the form of particles), add an acetyl chloride-toluene solution, heat the solution, once cool it, then boil it to hydrolyze the excess acetyl chloride, and titrate the resulting acetic acid with an ethanol solution of potassium hydroxide.

For the epoxy resin composition for a fiber-reinforced composite material according to the present invention, it is preferable that in the course of curing thereof by raising the temperature from 30°C at a rate of 10°C/min, a degree of cure Z such that the ratio between the existing urethane bonds and oxirane groups at that degree of cure Z is 0.10 or less, preferably 0.05 or less, be present in the range of 5% to 15%. Specifically, for the epoxy resin composition for a fiber-reinforced composite material according to the present invention, it is preferable that in the course of curing thereof by raising the temperature from 30°C at a rate of 10°C/min, the ratio between the existing urethane bonds and oxirane groups at a certain degree of cure in the range of 5% to 15% (for example, at a degree of cure of 10%) be 0.10 or less. If the ratio between the existing urethane bonds and oxirane groups is more than 0.10, a sufficient heat resistance and elastic modulus may not be achieved, and in addition, a noticeable viscosity increase may occur at low temperatures, possibly leading to insufficient impregnating property in impregnating the reinforcing fibers.

The ratio between the existing urethane bonds and oxirane groups referred to herein is a value determined by examining the epoxy resin composition with the aforementioned specific degree of cure Z by magnetic nuclear resonance and calculating the area ratio between the number of protons in the oxirane groups and the number of protons in the urethane bonds existing in the epoxy resin composition. For example, when high resolution magnetic nuclear resonance analysis (NMR measurement) is performed under the conditions of the use of a deuterated chloroform solvent, 500 MHz $^1$H-NMR, and accumulation of 128 measurements, the value can be determined based on high-resolution observation of the protons adjacent to the carbon atoms of the oxirane groups in the epoxy resin at 2.7 ppm and the protons adjacent to the nitrogen atoms in the urethane bonds at 5.4 ppm. Their ratio can be calculated from the area ratio in the $^1$H-NMR spectrum because it reflects the ratio of the quantities in terms of the number of moles.

For the epoxy resin composition for a fiber-reinforced composite material according to the present invention, it is preferable that the flexural modulus at a certain degree of cure in the range of 85% to 95% (for example, at a degree of cure of 90%) be 3.0 GPa or more and 6.0 GPa or less, and more preferably 3.4 GPa or more and 5.0 GPa or less. If the flexural modulus is less than 3.0 GPa, the resulting fiber-reinforced composite material will have an insufficient compression strength, whereas if it is more than 6.0 GPa, a rough sectional surface may be formed when the resulting fiber-reinforced composite material is cut.

For the epoxy resin composition for a fiber-reinforced composite material according to the present invention, it is preferable that the aforementioned components be properly blended in such a manner that the viscosity at 25°C is 0.1 to 1.0 Pa·s, more preferably 0.1 to 0.5 Pa·s. If the viscosity at 25°C is 1.0 Pa·s or less, it will serve to decrease the viscosity at the molding temperature, shorten the time of injection into a reinforcing fiber base, and eliminating problems that can cause defective impregnation. Furthermore, if the viscosity at 25°C is 0.1 Pa·s or more, it will serve to prevent the viscosity at the molding temperature from becoming too low, prevent pits from being formed as air is taken in during injection into the reinforcing fiber base, and prevent unimpregnated regions from being formed due to uneven impregnation. Here, the viscosity at 25°C is measured immediately after the preparation of the epoxy resin composition.

There are no particular limitations on the reinforcing fiber to be used in combination with the epoxy resin composition for a fiber-reinforced composite material according to the present invention, but those listed for the molding method for a fiber-reinforced composite material according to the present invention are generally preferred.

There are no particular limitations on the shape, structure, etc., of the fiber-reinforced composite material to be used in combination with the epoxy resin composition for a fiber-reinforced composite material according to the present invention, but those listed for the molding method for a fiber-reinforced composite material according to the present invention are generally preferred.

EXAMPLES

The invention will be illustrated in more detail below with reference to examples, although the invention is not limited thereto.

Examples 1 to 3, Reference examples 1, and Comparative examples 1 are as described below (including Table 1).

(1) Materials of epoxy resin composition

The following raw materials were used to prepare epoxy resin compositions to be used in Examples.

- jER (registered trademark) 828 (bisphenol A type epoxy resin, liquid, manufactured by Mitsubishi Chemical Corporation)
- Lupranate (registered trademark) M20S (polymeric MDI, manufactured by BASF INOAC Polyurethanes Ltd.)
- DBU (registered trademark) (1,8-diazabicyclo[5.4.0]undeca-7-ene, manufactured by San-Apro Ltd.)
- 3,3'-DAS (3,3'-diaminodiphenyl sulfone, manufactured by Mitsui Fine Chemical, Inc.)

(2) Preparation of epoxy resin composition

In Examples 1 to 3 and Reference example 1, 100 parts by mass of jER (registered trademark) 828 used as epoxy resin component and 4 parts by mass of DBU (registered trademark) are fed and kneaded to provide a transparent viscous liquid. Then, 72 parts by mass of Lupranate (registered trademark) M20S was added, followed by additional kneading to provide an epoxy resin composition.

In Comparative example 1, 75 parts by mass of jER (registered trademark) 828 used as epoxy resin component and 25 parts by mass of 3,3'-DAS are added, followed by additional kneading to provide an epoxy resin composition.

(3) Preparation of cured epoxy resin plate

The cured epoxy resin prepared in the above paragraph (2) was deaerated in a vacuum, cast into a pre-heated plate, and processed using a dynamic viscoelasticity test machine (ATD, manufactured by Alpha Technologies LLC) under the curing conditions given in Table 1.

(4) Measurement of degree of cure of cured epoxy resin plate

A 5 mg specimen was sampled from an epoxy resin composition prepared as in the aforementioned paragraph (2), and an exotherm curve was observed using a differential scanning calorimeter (DSC2910, manufactured by TA Instruments) in which measurements were taken as the specimen was heated from 30°C to 350°C at a heating rate of 10°C/min, followed by integrating the exothermic reaction peak to calculate the total heat value QT of the thermosetting resin. If an exothermic reaction peak or an endothermic reaction peak attributed to a decomposition reaction etc. occurs, measurement was performed in the temperature range below such peaks.

A 10 mg specimen was sampled from a cured epoxy resin plate prepared as in the aforementioned paragraph (3) or a cured epoxy resin plate taken out a predetermined time after the start of curing, and an exotherm curve was observed using a differential scanning calorimeter (DSC2910, manufactured by TA Instruments) in which measurements were taken as the specimen was heated from 30°C to 350°C at a heating rate of 10°C/min, followed by integrating the exothermic reaction peak to calculate the residual heat value QR of the cured epoxy resin. If an exothermic reaction peak or an endothermic reaction peak attributed to a decomposition reaction etc. occurs, measurement was performed in the temperature range below such peaks.

Here, the degree of cure (%) determined by DSC was calculated as follows: degree of cure (%) = (QT-QR) / QT $\times$ 100.

In these measuring runs, furthermore, the time required for the epoxy resin composition to reach a specific degree of cure (a degree of cure of 20% in the case of these Examples) in the degree-of-cure range of 15% to 25% was calculated.

(5) Measurement of glass transition temperature of cured epoxy resin plate

A 10 mg specimen was sampled from a cured epoxy resin plate prepared as in the aforementioned paragraph (3), and measurement was performed using a differential scanning calorimeter (DSC2910, manufactured by TA Instruments) in which measurements were taken as the specimen was heated from 30°C to 350°C at a heating rate of 10°C/min. Then, the midpoint temperature determined according to JIS K7121 (1987) was adopted as the glass transition temperature Tg and used for heat resistance evaluation.

(6) Measurement of bending deflection of cured epoxy resin plate

The surface of a cured epoxy resin plate prepared as in the aforementioned paragraph (3) was polished with #240, #800, or #2000 sand paper to prepare a cured epoxy resin plate with a thickness of 2 mm. Then, the resulting cured epoxy resin plate was cut to prepare a specimen with a width of 10 mm and length of 60 mm, and it was subjected to three point bending test with a span of 32 mm, followed by determining the bending deflection, which represents the toughness of the resin, according to JIS K7171 (1994).

(7) Measurement of absorbance ratio of cured epoxy resin plate

A specimen was sampled from a cured epoxy resin plate prepared as in the aforementioned paragraph (3) or an epoxy resin composition having a specific degree of cure (a degree of cure of 20% in the case of these Examples) in the degree-of-cure range of 15% to 25% and examined by FT-IR (ATR mode) using a FT-IR machine (7000 FT-IR, manufactured by Varian, Inc.). The measuring conditions included a resolution of 4 $cm^{-1}$ and accumulation of 32 measurements.

Here, the absorbance ratio of Da/(Da+Db) was calculated from the absorbance Da of the absorption near 1,760 $cm^{-1}$ attributed to the C=O double bond of the carboxyl group in the oxazolidone ring and the absorbance Db of the absorption near 1,710 $cm^{-1}$ attributed to the C=O double bond of the carboxyl group in the isocyanurate ring.

(8) Measurement of mass decrease rate of cured epoxy resin plate by TGA

A 10 mg specimen was sampled from a cured epoxy resin plate prepared as in the aforementioned paragraph (3) and subjected to measurement of the mass decrease rate in a nitrogen (purity 99.99% or more) flow using a thermogravimetric analysis apparatus (TGA7, manufactured by Perkin-Elmer) under the conditions of a programed temperature of 50°C maintained for 1 minute and a programed temperature increase from 50°C to 800°C at a temperature ramp rate of 20°C/min.

To determine the mass decrease rate $\Delta Wr$, the mass W1 of the specimen reaching 70°C in the aforementioned heating process and the mass W2 of the specimen reaching 320°C were measured and used for the following calculation: mass decrease rate $\Delta Wr$ (%) = (W1-W2) / W1 $\times$ 100.

(9) Preparation of fiber-reinforced composite material

A die having a plate cavity with a size of 350 mm $\times$ 700 mm $\times$ 2 mm was prepared, and 9 sheets of carbon fiber woven fabric (CO6343, manufactured by Toray Industries, Inc., carbon fiber: T300-3K, structure: plain weave, areal weight: 198 g/m$^2$), which was adopted as reinforcing fiber component, were placed in the cavity, and clamped in a press machine. Next, the die was maintained at 100°C (molding temperature) and depressurized by a vacuum pump to a pressure smaller by 0.1 MPa than atmospheric pressure. Then, an epoxy resin composition, which had been pre-heated beforehand at 50°C, was mixed and injected by a resin injector under a pressure of 0.2 MPa. Subsequently, it was cured under the curing conditions specified in Table 1 and demolded to provide a fiber-reinforced composite material.

(10) Measurement of glass transition temperature of fiber-reinforced composite material

A 10 mg specimen was sampled from a fiber-reinforced composite material prepared as in the aforementioned paragraph (9), and measurement was performed using a differential scanning calorimeter (DSC2910, manufactured by TA Instruments) in which measurements were taken as the specimen was heated from 30°C to 350°C at a heating rate of 10°C/min. Then, the midpoint temperature determined according to JIS K7121 (1987) was adopted as the glass transition temperature Tg and used for heat resistance evaluation.

(Example 1)

A cured product of an epoxy resin composition and a fiber-reinforced composite material were prepared as described above under the curing conditions specified in Table 1. The resulting cured product of an epoxy resin composition was satisfactory in heat resistance and $\Delta Wr$ and high in toughness.

(Example 2)

The curing conditions were changed from Example 1. The resulting cured product of an epoxy resin composition was satisfactory in heat resistance and high in toughness and $\Delta Wr$.

(Example 3)

The curing conditions were changed from Example 1. The resulting cured product of an epoxy resin composition had excellent heat resistance, toughness, and $\Delta Wr$.

(Reference Example 1)

The curing conditions were changed from Example 1. The resulting cured product of an epoxy resin composition had an inferior Da/(Da+Db) ratio and also had inferior toughness and $\Delta wr$ in spite of having excellent heat resistance.

(Comparative example 1)

An amine compound was included as a curing agent other than the component [b]. The resulting cured product of an epoxy resin composition had no oxazolidone ring formed therein and had inferior heat resistance and $\Delta Wr$.

[Table 1]

[Table 1]

|  |  | Example 1 | Example 2 | Example 3 | Reference example 1 | Comparative example 1 |
|---|---|---|---|---|---|---|
| curing conditions |  | 120°C 120 min + 180°C 120 min | 150°C 120 min + 180°C 120 min | 180°C 240 min | 90°C 120 min + 180°C 120 min | 150°C 120 min |
| epoxy resin composition | Da/(Da+Db) of cured product | 0.43 | 0.64 | 0.78 | 0.26 | 0 |
|  | Da/(Da+Db) at degree of cure of 20% | 0.02 | 0.07 | 0.15 | 0 | 0 |
|  | glass transition temperature of cured product [°C] | 172 | 174 | 183 | 187 | 170 |
|  | bending deflection of cured product [mm] | 6 | 6 | 8 | 2 | 4 |
|  | ΔWr of cured product [%] | 9 | 7 | 5 | 11 | 23 |
| fiber-reinforced composite material | glass transition temperature [°C] | 170 | 172 | 181 | 185 | 168 |

In Examples 4 to 27 and Comparative examples 2 to 8, cured products were produced as described below (see also Tables 2-1 to 2-4).

(1) Materials of epoxy resin composition

The following raw materials were used to prepare epoxy resin compositions to be used in the Examples.

[a] an epoxy resin having at least two oxirane groups in the molecule

- jER (registered trademark) 828 (bisphenol A type epoxy resin, manufactured by Mitsubishi Chemical Corporation)
- Epotohto (registered trademark) YD-8125 (bisphenol A type epoxy resin, manufactured by NIPPON STEEL Chemical & Material Co., Ltd.)
- EPICLON (registered trademark) 830 (bisphenol F type epoxy resin, manufactured by DIC Corporation)
- Modified YD-8125

First, 10 parts by mass of acetic anhydride was added to 100 parts by mass of Epotohto (registered trademark) YD-8125, and the mixture was heated while stirring at 110°C for 1 hour, followed by acetylating the small amount of hydroxyl groups contained in YD-8125. Then, vacuum heating was performed at 110°C to remove the excess acetic acid and the newly formed acetic acid, thereby provide modified YD-8125.

- Denacol EX-313 (glycerin type epoxy resin, 1,3-bis(oxiranylmethoxy)propan-2-ol, manufactured by Nagase ChemteX Corporation)
- Araldite (registered trademark) MY0510 (triglycidyl-p-aminophenol, manufactured by Huntsman Advanced Materials)
- Araldite (registered trademark) MY721 (tetraglycidyl diaminodiphenyl methane, manufactured by Huntsman Advanced Materials)

[b] an epoxy resin curing agent having at least two isocyanate groups

- Lupranate (registered trademark) M20S (polymeric MDI, manufactured by BASF INOAC Polyurethanes Ltd.)
- Lupranate (registered trademark) MI (polymeric MDI, manufactured by BASF INOAC Polyurethanes Ltd.)

[c] a catalyst

- DBU (registered trademark) (1,8-diazabicyclo[5.4.0]undec-7-ene, manufactured by San-Apro Ltd., pKb=25)
- DBU/phthalic acid (manufactured by Tokyo Chemical Industry Co., Ltd., pKa=3) salt
- DBU/dichloroacetic acid (manufactured by Tokyo Chemical Industry Co., Ltd., pKa=1.5) salt
- DBU/p-toluenesulfonic acid (manufactured by Tokyo Chemical Industry Co., Ltd., pKa=-3) salt
- DBN (registered trademark) (1,5-diazabicyclo[4.3.0]-5-nonene, manufactured by San-Apro Ltd., pKb=24)/phthalic acid salt
- TBD (1,5,7-triazabicyclo[4.4.0]dec-5-ene, manufactured by Tokyo Chemical Industry Co., Ltd. , pKb=26)/dichloroacetic acid salt
- TBAB (tetrabutylammonium bromide, manufactured by Tokyo Chemical Industry Co., Ltd.)
- Hokuko TBP-BB (registered trademark) (tetrabutylphosphonium bromide, manufactured by Hokko Chemical Industry Co., Ltd.)

Epoxy resin other than [a]

- BGE (4-tert-butylphenyl glycidyl ether, manufactured by Tokyo Chemical Industry Co., Ltd.)

Epoxy resin curing agent having isocyanate groups other than [b]

- 2-phenylethyl isocyanate (manufactured by Tokyo Chemical Industry Co., Ltd.)

Components other than [a] to [c]

- Polypropylene glycol (manufactured by FUJIFILM Wako Pure Chemical Corporation)
- Lonzacure (registered trademark) M-DEA (manufactured by Huntsman Advanced Materials)

(2) Preparation of epoxy resin composition

An epoxy resin and a catalyst were mixed at the mixing ratio (by mass) given in Tables 2-1 to 2-4. After confirming complete dissolution by phase contrast microscopy, an epoxy resin curing agent was added to prepare an epoxy resin composition.

(3) Hydroxyl group content in epoxy resin composition

Here, the hydroxyl group content in an epoxy resin composition was calculated by the following equation 3 from the hydroxyl group equivalent weight of each component.

$$COH = (\Sigma(wn/wnOH)) / W \times 1000 \qquad \text{(equation 3)}$$

COH: content of hydroxyl group in epoxy resin composition (mol/kg)
wn: number of parts by mass of each component
wnOH: hydroxyl group equivalent weight of each component (g/eq)
W: total number of parts by mass of all components

To determine the hydroxyl group equivalent weight of each component, the hydroxyl value (in mgKOH/g) of the component [a] was measured by titration according to the pyridine-acetyl chloride method specified in JIS K 0070 (1992) and divided by the formula weight of potassium hydroxide (56.11) to calculate the hydroxyl group content (in mmol/g). Specifically, the procedure of the pyridine-acetyl chloride method, which is designed to measure the hydroxyl group equivalent weight of an epoxy resin, is to dissolve a specimen under measurement in pyridine, add an acetyl chloride-toluene solution, heat the solution, once cool it, then boil it to hydrolyze the excess acetyl chloride, and titrate the resulting acetic acid with an ethanol solution of potassium hydroxide.

(4) Measurement of viscosity of epoxy resin composition

Using a dynamic viscoelasticity measuring instrument (ARES, manufactured by TA Instruments) equipped with parallel plates with a diameter of 40 mm, measurement was performed under the conditions of linear temperature increase at a temperature ramp rate of 1.5°C/min, a frequency of 1 Hz, and a Gap of 1 mm to determine the complex viscosity $\eta^*$ at 25°C.

(5) Preparation of cured epoxy resin plate

An epoxy resin composition prepared as in the above paragraph (2) was deaerated in a vacuum, cast into a pre-heated plate, and heated by a dynamic viscoelasticity test machine (ATD, manufactured by Alpha Technologies LLC) at a rate of 10°C/min from 30°C to a temperature where the degree of cure determined by the procedure described in the paragraph (6) reaches 90%.

(6) Measurement of degree of cure of cured epoxy resin plate

A 5 mg specimen was sampled from an epoxy resin composition prepared as in the aforementioned paragraph (2), and an exotherm curve was observed using a differential scanning calorimeter (DSC2910, manufactured by TA Instruments) in which measurements were taken as the specimen was heated from 30°C to 350°C at a heating rate of 10°C/min, followed by integrating the exothermic reaction peak to calculate the total heat value QT of the thermosetting resin. If an exothermic reaction peak or an endothermic reaction peak attributed to a decomposition reaction etc. occurs, measurement was performed in the temperature range below such peaks.

A 10 mg specimen was sampled from a cured epoxy resin plate prepared as in the aforementioned paragraph (5), and an exotherm curve was observed using a differential scanning calorimeter (DSC2910, manufactured by TA Instruments) in which measurements were taken as the specimen was heated from 30°C to 350°C at a heating rate of 10°C/min, followed by integrating the exothermic reaction peak to calculate the residual heat value QR of the cured epoxy resin. If an exothermic reaction peak or an endothermic reaction peak attributed to a decomposition reaction etc. occurs, measurement was performed in the temperature range below such peaks.

Here, the degree of cure (%) determined by DSC was calculated as follows: degree of cure (%) = (QT-QR) / QT × 100.

For these measuring runs, furthermore, the temperature required for the epoxy resin composition to reach the specific degree of cure X (a degree of cure of 90% in the case of these Examples), the temperature required to reach the specific degree of cure Y (a degree of cure of 20% in the case of these Examples), and the temperature required to reach the specific degree of cure Z (a degree of cure of 10% in the case of these Examples) were calculated.

(7) Ratio of existing urethane bond and oxirane group at specific degree of cure Z

A specimen was sampled from a cured epoxy resin having the specific degree of cure Z (a degree of cure of 10% in the case of these Examples) prepared as in the aforementioned paragraph (5), and measurement was performed under the conditions of the use of a deuterated chloroform solvent, 500 MHz $^1$H-NMR, and accumulation of 128 measurements. The ratio was calculated from the area of the protons adjacent to the carbon atoms of the oxirane groups in the epoxy resin at 2.7 ppm and that of the protons adjacent to the nitrogen atoms in the urethane bonds at 5.4 ppm.

(8) Measurement of absorbance ratio between specific degrees of cure X and Y

Specimens were sampled from cured epoxy resins having the specific degree of cure X (a degree of cure of 90% in the case of these Examples) or the specific degree of cure Y (a degree of cure of 20% in the case of these Examples) prepared as in the aforementioned paragraph (5) and examined by FT-IR (ATR mode) using a FT-IR machine (7000FT-IR, manufactured by Varian, Inc.). The measuring conditions included a resolution of 4 cm[-1] and accumulation of 32 measurements.

Here, the absorbance ratio of Da/(Da+Db) was calculated from the absorbance Da of the absorption near 1,760 cm$^{-1}$ attributed to the C=O double bond of the carboxyl group in the oxazolidone ring and the absorbance Db of the absorption near 1,710 cm$^{-1}$ attributed to the C=O double bond of the carboxyl group in the isocyanurate ring.

(9) Measurement of glass transition temperature at specific degrees of cure X

A 10 mg specimen was sampled from a cured epoxy resin having the specific degree of cure X (a degree of cure of 90% in the case of these Examples) prepared as in the aforementioned paragraph (5), and measurement was performed using a differential scanning calorimeter (DSC2910, manufactured by TA Instruments) in which measurements were taken as the specimen was heated from 30°C to 350°C at a heating rate of 10°C/min. Then, the midpoint temperature determined according to JIS K7121 (1987) was adopted as the glass transition temperature Tg and used for heat resistance evaluation.

(10) Measurement of rubbery state elastic modulus at specific degree of cure X

A specimen with a width of 10 mm and a length of 40 mm was cut out of a cured epoxy resin having the degree of cure X (a degree of cure of 90% in the case of these Examples) prepared as in the aforementioned paragraph (5), and it was set to the solid twisting jig in a dynamic viscoelasticity measuring instrument (ARES, manufactured by TA Instruments) and subjected to measurement over the temperature range from 30°C to 300°C under the conditions of a heating rate of 5°C/ min, a frequency of 1 Hz, and a strain of 0.1%. The storage modulus at a temperature higher by 50°C than the glass transition temperature that was determined in the dynamic viscoelasticity measurement was adopted as the rubbery state elastic modulus, which represents the cross-linking density. Here, the glass transition temperature determined by the dynamic viscoelasticity measurement was defined as the temperature where the tangent drawn to the temperature-storage modulus curve in the glass region and the tangent drawn thereto in the glass transition region intersect each other.

(11) Measurement of flexural modulus and bending deflection at specific degree of cure X

The surface of a cured epoxy resin having the degree of cure X (a degree of cure of 90% in the case of these Examples) prepared as in the aforementioned paragraph (5) was polished with #240, #800, or #2000 sand paper to prepare a cured epoxy resin plate with a thickness of 2 mm. The resulting cured epoxy resin plate was cut to prepare a specimen with a width of 10 mm and length of 60 mm and subjected to three point bending test with a span of 32 mm, followed by determining the flexural modulus and the bending deflection, which represents the toughness of the resin, according to JIS K7171 (1994).

(Example 4)

An epoxy resin composition was prepared in the same way as described above according to the content ratio specified in Table 2-1. The resulting epoxy resin composition was high in the viscosity at 25°C. The epoxy resin composition having a degree of cure of 90% was high in heat resistance, toughness, and elastic modulus.

(Example 5)

As the component [a], an epoxy resin with a smaller hydroxyl group content than in Example 4 was used. The resulting epoxy resin composition was particularly high in the viscosity at 25°C. The epoxy resin composition having a degree of cure of 90% was high in heat resistance and elastic modulus and particularly high in toughness.

(Example 6)

Unlike Example 4, a bisphenol F type epoxy resin was used as the component [a]. The resulting epoxy resin composition was particularly high in the viscosity at 25°C. The epoxy resin composition having a degree of cure of 90% was satisfactory in heat resistance and high in toughness and elastic modulus.

(Examples 7 to 11)

Unlike Example 4, a salt of a Broensted base and a Broensted acid was used as the component [c]. The resulting epoxy resin composition was high in the viscosity at 25°C. The epoxy resin composition having a degree of cure of 90% was satisfactory in heat resistance and high in toughness and elastic modulus.

(Examples 12 and 13)

Unlike Example 4, a halogenated onium salt was used as the component [c]. The resulting epoxy resin composition was high in the viscosity at 25°C. The epoxy resin composition having a degree of cure of 90% was satisfactory in heat resistance and high in toughness and elastic modulus.

(Example 14)

Unlike Example 4, the amount of the component [c] was changed to 1 part by mass. The resulting epoxy resin composition was high in the viscosity at 25°C. The epoxy resin composition having a degree of cure of 90% was satisfactory in heat resistance and elastic modulus and high in toughness.

(Example 15)

Unlike Example 4, the amount of the component [c] was changed to 10 parts by mass. The resulting epoxy resin composition was satisfactory in the viscosity at 25°C. The epoxy resin composition having a degree of cure of 90% was high in heat resistance and elastic modulus and satisfactory in toughness.

(Example 16)

Unlike Example 4, the ratio between the number of isocyanate groups in the component [b] and the number of oxirane groups in the epoxy resin composition was changed to 0.8. The resulting epoxy resin composition was high in the viscosity at 25°C. The epoxy resin composition having a degree of cure of 90% was satisfactory in heat resistance and elastic modulus and high in toughness.

(Example 17)

Unlike Example 4, the ratio between the number of isocyanate groups in the component [b] and the number of oxirane groups in the epoxy resin composition was changed to 0.5. The resulting epoxy resin composition was satisfactory in the viscosity at 25°C. The epoxy resin composition having a degree of cure of 90% was inferior in heat resistance and elastic modulus but satisfactory in toughness.

(Example 18)

Unlike Example 4, the ratio between the number of isocyanate groups in the component [b] and the number of oxirane groups in the epoxy resin composition was changed to 1.1. The resulting epoxy resin composition was high in the viscosity at 25°C. The epoxy resin composition having a degree of cure of 90% was high in heat resistance and elastic modulus and satisfactory in toughness.

(Example 19)

Unlike Example 4, the ratio between the number of isocyanate groups in the component [b] and the number of oxirane groups in the epoxy resin composition was changed to 1.4. The resulting epoxy resin composition was high in the viscosity at 25°C. The epoxy resin composition having a degree of cure of 90% was high in heat resistance and elastic modulus and acceptable in toughness.

(Example 20)

Unlike Example 4, the ratio between the number of isocyanate groups in the component [b] and the number of oxirane groups in the epoxy resin composition was changed to 1.7. The resulting epoxy resin composition was high in the viscosity at 25°C. The epoxy resin composition having a degree of cure of 90% was high in heat resistance and elastic modulus and acceptable in toughness.

(Example 21)

Unlike Example 4, a different compound was used as the component [b]. The resulting epoxy resin composition was high in the viscosity at 25°C. The epoxy resin composition having a degree of cure of 90% was satisfactory in heat resistance and elastic modulus and high in toughness.

(Example 22)

Unlike Example 4, an epoxy resin with a smaller hydroxyl group content accounted for 30% of the component [a]. The resulting epoxy resin composition was slightly higher in the viscosity at 25°C. The epoxy resin composition having a degree of cure of 90% was also higher in heat resistance and toughness.

(Example 23)

Compared with Example 22, an epoxy resin with a smaller hydroxyl group content accounted for a larger proportion, namely 70%, of the component [a]. The resulting epoxy resin composition was still higher in the viscosity at 25°C. The epoxy resin composition having a degree of cure of 90% was also still higher in heat resistance and toughness.

(Example 24)

Unlike Example 4, a tetrafunctional amine type epoxy resin was used as the component [a]. The resulting epoxy resin composition was particularly high in the viscosity at 25°C. The epoxy resin composition having a degree of cure of 90% was particularly high in heat resistance and elastic modulus and acceptable in toughness.

(Example 25)

Unlike Example 4, the combination of a bisphenol F type epoxy resin and a trifunctional amine type epoxy resin was used as the component [a]. The resulting epoxy resin composition was high in the viscosity at 25°C. The epoxy resin composition having a degree of cure of 90% was particularly high in heat resistance and elastic modulus and high in toughness.

(Example 26)

Unlike Example 4, the combination of a bisphenol F type epoxy resin and a tetrafunctional amine type epoxy resin was used as the component [a]. The resulting epoxy resin composition was high in the viscosity at 25°C. The epoxy resin composition having a degree of cure of 90% was particularly high in heat resistance and elastic modulus and high in toughness.

(Example 27)

As compared with Example 5, an epoxy resin with a still smaller hydroxyl group content was used as the component [a]. The resulting epoxy resin composition was still higher in the viscosity at 25°C. The epoxy resin composition having a degree of cure of 90% was also still higher in heat resistance and toughness.

(Comparative example 2)

A glycerin type epoxy resin was added as the component [a]. The resulting epoxy resin composition was inferior in the viscosity at 25°C, and at a degree of cure of 90%, it was also inferior in heat resistance and elastic modulus.

(Comparative example 3)

A monofunctional epoxy resin was added as the component [a]. The resulting epoxy resin composition was inferior in the viscosity at 25°C, and at a degree of cure of 90%, it was also inferior in heat resistance and elastic modulus.

(Comparative example 4)

A monofunctional isocyanate was added as the component [b]. The resulting epoxy resin composition was inferior in the viscosity at 25°C, and at a degree of cure of 90%, it was also inferior in heat resistance and elastic modulus.

(Comparative example 5)

The component [c] was not included, and the production of a cured product having a degree of cure of 90% was impossible under the specified conditions.

(Comparative example 6)

This is similar to Example 112 of Patent document 1 (International Publication WO 2014/184082). A large number of isocyanurate rings were formed, leading to inferior toughness.

(Comparative example 7)

This is similar to Example 1 of Patent document 2 (International Publication WO 2016/102358). The addition of a polyol to a resin composition led to a large increase in the hydroxyl group content, and accordingly, a large number of urethane bonds were formed. The composition was inferior in the viscosity at 25°C, and at a degree of cure of 90%, it was also inferior in heat resistance and elastic modulus.

(Comparative example 8)

The component [c] was not included, and an amine curing agent was added instead of the component [b]. The resulting composition was inferior in the viscosity at 25°C, and at a degree of cure of 90%, it was also inferior in heat resistance and elastic modulus.

[Table 2-1]

| | | | Example 4 | Example 5 | Example 6 | Example 7 | Example 8 | Example 9 | Example 10 | Example 11 | Example 12 | Example 13 |
|---|---|---|---|---|---|---|---|---|---|---|---|---|
| [a] epoxy resin having at least two oxirane groups in molecule | | jER 828 | 100 | | | 100 | 100 | 100 | 100 | 100 | 100 | 100 |
| | | Epotohto YD-8125 | | 100 | | | | | | | | |
| | | EPICRON 830 | | | 100 | | | | | | | |
| | | modified YD-8125 | | | | | | | | | | |
| | | Denacol EX-313 | | | | | | | | | | |
| | | Araldite MY0510 | | | | | | | | | | |
| | | Araldite MY721 | | | | | | | | | | |
| [b] epoxy resin curing agent having at least two isocyanate groups in molecule | | Lupranate M20S | 72 | 80 | 87 | 72 | 72 | 72 | 72 | 72 | 72 | 72 |
| | | Lupranate MI | | | | | | | | | | |

(continued)

| | | | Example 4 | Example 5 | Example 6 | Example 7 | Example 8 | Example 9 | Example 10 | Example 11 | Example 12 | Example 13 |
|---|---|---|---|---|---|---|---|---|---|---|---|---|
| component | [c] catalyst | DBU | 4 | 4 | 4 | | | | | | | |
| | | DBU/phthalic acid salt | | | | 4 | | | | | | |
| | | DBU/ dichloroacetic acid salt | | | | | | 4 | | | | |
| | | DBU/p-toluene sulfonic acid salt | | | | | | | 4 | | | |
| | | DBN/ dichloroacetic acid salt | | | | | | | | 4 | | |
| | | TBD/ dichloroacetic acid salt | | | | | | | | | 4 | |
| | | TBAB | | | | | | | | | | 4 |
| | | Hokuko TBP-BB | | | | | | | | | | |
| | epoxy resin other than [a] | BGE | | | | | | | | | | |
| | epoxy resin curing agent having isocyanate group other than [b] | 2-phenylethyl isocyanate | | | | | | | | | | |
| | component other than [a] to [c] | polypropylene glycol | | | | | | | | | | |
| | | Lonzacure M-DEA | | | | | | | | | | |

EP 4 063 436 A1

(continued)

| epoxy resin composition | | Example 4 | Example 5 | Example 6 | Example 7 | Example 8 | Example 9 | Example 10 | Example 11 | Example 12 | Example 13 |
|---|---|---|---|---|---|---|---|---|---|---|---|
| | isocyanate groups in [b] [mol] / oxirane groups in epoxy resin composition [mol] | 1 | 1 | 1 | 1 | 1 | 1 | 1 | 1 | 1 | 1 |
| | hydroxyl group content [molOH/1kg epoxy resin composition] | 0.17 | 0.05 | 0.17 | 0.17 | 0.17 | 0.17 | 0.17 | 0.17 | 0.17 | 0.17 |
| | viscosity at 25°C [Pa·s] | 0.5 | 0.2 | 0.3 | 0.4 | 0.4 | 0.4 | 0.4 | 0.4 | 0.4 | 0.4 |
| | urethane bonds at degree of cure of 10% [mol] / oxirane groups [mol] | 0.05 | 0.02 | 0.04 | 0.04 | 0.04 | 0.04 | 0.04 | 0.04 | 0.04 | 0.04 |
| | $D_a/(D_a+D_b)$ at degree of cure of 20% | 0.13 | 0.17 | 0.14 | 0.14 | 0.17 | 0.19 | 0.14 | 0.2 | 0.14 | 0.14 |
| | $D_a/(D_a+D_b)$ at degree of cure of 90% | 0.71 | 0.74 | 0.71 | 0.72 | 0.74 | 0.75 | 0.72 | 0.75 | 0.72 | 0.72 |
| | rubbery state elastic modulus at degree of cure of 90% | 6 | 3 | 6 | 5 | 5 | 4 | 5 | 4 | 5 | 5 |
| | glass transition temperature at degree of cure of 90% [°C] | 181 | 187 | 171 | 179 | 177 | 176 | 178 | 176 | 176 | 174 |
| | bending deflection at degree of cure of 90% [mm] | 7 | 10 | 9 | 7 | 8 | 9 | 7 | 9 | 7 | 7 |
| | elastic modulus at degree of cure of 90% [GPa] | 3.3 | 3.3 | 3.5 | 3.3 | 3.3 | 3.3 | 3.3 | 3.3 | 3.3 | 3.3 |

[Table 2-2]

[Table 2-2]

| | | | Example 14 | Example 15 | Example 16 | Example 17 | Example 18 | Example 19 | Example 20 | Example 21 |
|---|---|---|---|---|---|---|---|---|---|---|
| | [a] epoxy resin having at least two oxirane groups in molecule | jER 828 | 100 | 100 | 100 | 100 | 100 | 100 | 100 | 100 |
| | | Epotohto YD-8125 | | | | | | | | |
| | | EPICRON 830 | | | | | | | | |
| | | modified YD-8125 | | | | | | | | |
| | | Denacol EX-313 | | | | | | | | |
| | | Araldite MY0510 | | | | | | | | |
| | | Araldite MY721 | | | | | | | | |
| | [b] epoxy resin curing agent having at least two isocyanate groups in molecule | Lupranate M20S | 72 | 72 | 58 | 36 | 79 | 101 | 122 | |
| | | Lupranate MI | | | | | | | | 66 |

EP 4 063 436 A1

| | | | Example 14 | Example 15 | Example 16 | Example 17 | Example 18 | Example 19 | Example 20 | Example 21 |
|---|---|---|---|---|---|---|---|---|---|---|
| component | [c] catalyst | DBU | 1 | 10 | 4 | 4 | 4 | 4 | 4 | 4 |
| | | DBU/phthalic acid salt | | | | | | | | |
| | | DBU/ dichloroacetic acid salt | | | | | | | | |
| | | DBU/p-toluene sulfonic acid salt | | | | | | | | |
| | | DBN/ dichloroacetic acid salt | | | | | | | | |
| | | TBD/ dichloroacetic acid salt | | | | | | | | |
| | | TBAB | | | | | | | | |
| | | Hokuko TBP-BB | | | | | | | | |
| | epoxy resin other than [a] | BGE | | | | | | | | |
| | epoxy resin curing agent having isocyanate group other than [b] | 2-phenylethyl isocyanate | | | | | | | | |
| | component other than [a] to [c] | polypropylene glycol | | | | | | | | |
| | | Lonzacure M-DEA | | | | | | | | |

EP 4 063 436 A1

29

| | | Example 14 | Example 15 | Example 16 | Example 17 | Example 18 | Example 19 | Example 20 | Example 21 |
|---|---|---|---|---|---|---|---|---|---|
| epoxy resin composition | isocyanate groups in [b] [mol] / oxirane groups in epoxy resin composition [mol] | 1 | 1 | 0.8 | 0.5 | 1.1 | 1.4 | 1.7 | 1 |
| | hydroxyl group content [molOH/1kg epoxy resin composition] | 0.17 | 0.16 | 0.18 | 0.21 | 0.16 | 0.14 | 0.12 | 0.17 |
| | viscosity at 25°C [Pa·s] | 0.4 | 1 | 0.4 | 0.9 | 0.6 | 0.4 | 0.3 | 0.4 |
| | urethane bonds at degree of cure of 10% [mol] / oxirane groups [mol] | 0.04 | 0.08 | 0.04 | 0.03 | 0.08 | 0.08 | 0.08 | 0.06 |
| | Da/(Da+Db) at degree of cure of 20% | 0.15 | 0.07 | 0.21 | 0.2 | 0.06 | 0.05 | 0.04 | 0.13 |
| | Da/(Da+Db) at degree of cure of 90% | 0.75 | 0.62 | 0.8 | 0.82 | 0.56 | 0.50 | 0.41 | 0.72 |
| | rubbery state elastic modulus at degree of cure of 90% | 4 | 12 | 5 | 1 | 7 | 10 | 15 | 5 |
| | glass transition temperature at degree of cure of 90% [°C] | 173 | 185 | 170 | 145 | 193 | 207 | 219 | 171 |
| | bending deflection at degree of cure of 90% [mm] | 9 | 6 | 9 | 5 | 5 | 4 | 3 | 9 |
| | elastic modulus at degree of cure of 90% [GPa] | 3.2 | 3.3 | 3.2 | 2.8 | 3.5 | 3.6 | 3.7 | 3.2 |

[Table 2-3]

[Table 2-3]

| | | | Example 22 | Example 23 | Example 24 | Example 25 | Example 26 | Example 27 |
|---|---|---|---|---|---|---|---|---|
| | [a] epoxy resin having at least two oxirane groups in molecule | jER 828 | 70 | 30 | | | | |
| | | Epotohto YD-8125 | 30 | 70 | | | | |
| | | EPICRON 830 | | | | 50 | 50 | |
| | | modified YD-8125 | | | | | | 100 |
| | | Denacol EX-313 | | | | | | |
| | | Araldite MY0510 | | | | 50 | | |
| | | Araldite MY721 | | | 100 | | 50 | |
| | [b] epoxy resin curing agent having at least two isocyanate groups in molecule | Lupranate M20S | 80 | 80 | 135 | 106 | 100 | 80 |
| | | Lupranate MI | | | | | | |

EP 4 063 436 A1

| component | | | Example 22 | Example 23 | Example 24 | Example 25 | Example 26 | Example 27 |
|---|---|---|---|---|---|---|---|---|
| | [c] catalyst | DBU | 4 | 4 | 4 | 4 | 4 | 4 |
| | | DBU/phthalic acid salt | | | | | | |
| | | DBU/ dichloroacetic acid salt | | | | | | |
| | | DBU/p-toluene sulfonic acid salt | | | | | | |
| | | DBN/ dichloroacetic acid salt | | | | | | |
| | | TBD/ dichloroacetic acid salt | | | | | | |
| | | TBAB | | | | | | |
| | | Hokuko TBP-BB | | | | | | |
| | epoxy resin other than [a] | BGE | | | | | | |
| | epoxy resin curing agent having isocyanate group other than [b] | 2-phenylethyl isocyanate | | | | | | |
| | component other than [a] to [c] | polypropylene glycol | | | | | | |
| | | Lonzacure M-DEA | | | | | | |

EP 4 063 436 A1

33

(continued)

| | | Example 22 | Example 23 | Example 24 | Example 25 | Example 26 | Example 27 |
|---|---|---|---|---|---|---|---|
| epoxy resin composition | isocyanate groups in [b] [mol] / oxirane groups in epoxy resin composition [mol] | 1 | 1 | 1 | 1 | 1 | 1 |
| | hydroxyl group content [molOH/1kg epoxy resin composition] | 0.13 | 0.09 | 0.03 | 0.08 | 0.08 | < 0.01 |
| | viscosity at 25°C [Pa·s] | 0.4 | 0.3 | 0.7 | 0.4 | 0.4 | 0.1 |
| | urethane bonds at degree of cure of 10% [mol] / oxirane groups [mol] | 0.04 | 0.03 | 0.01 | 0.02 | 0.02 | 0.01 |
| | Da/(Da+Db) at degree of cure of 20% | 0.14 | 0.16 | 0.15 | 0.15 | 0.16 | 0.26 |
| | Da/(Da+Db) at degree of cure of 90% | 0.72 | 0.73 | 0.71 | 0.72 | 0.73 | 0.80 |
| | rubbery state elastic modulus at degree of cure of 90% | 5 | 4 | 10 | 6 | 6 | 2 |
| | glass transition temperature at degree of cure of 90% [°C] | 183 | 185 | 259 | 212 | 215 | 189 |
| | bending deflection at degree of cure of 90% [mm] | 8 | 9 | 3 | 9 | 8 | 12 |
| | elastic modulus at degree of cure of 90% [GPa] | 3.3 | 3.3 | 4.1 | 3.7 | 3.8 | 3.3 |

[Table 2-4]

| | | | Comparative example 2 | Comparative example 3 | Comparative example 4 | Comparative example 5 | Comparative example 6 | Comparative example 7 | Comparative example 8 |
|---|---|---|---|---|---|---|---|---|---|
| [a] epoxy resin having at least two oxirane groups in molecule | | jER 828 | | | 100 | 100 | 100 | 100 | |
| | | Epotohto YD-8125 | | | | | | | |
| | | EPICRON 830 | | | | | | | 50 |
| | | modified YD-8125 | | | | | | | |
| | | Denacol EX-313 | 100 | | | | | | |
| | | Araldite MY0510 | | | | | | | |
| | | Araldite MY721 | | | | | | | 50 |
| [b] epoxy resin curing agent having at least two isocyanate groups in molecule | | Lupranate M20S | 96 | 66 | | 72 | 144 | 72 | |
| | | Lupranate MI | | | | | | | |

EP 4 063 436 A1

(continued)

| component | [c] catalyst | DBU | 4 | 4 | 4 | | 0.03 | 0.8 | |
| | | DBU/phthalic acid salt | | | | | | | |
| | | DBU/ dichloroacetic acid salt | | | | | | | |
| | | DBU/p-toluene sulfonic acid salt | | | | | | | |
| | | DBN/ dichloroacetic acid salt | | | | | | | |
| | | TBD/ dichloroacetic acid salt | | | | | | | |
| | | TBAB | | | | | | | |
| | | Hokuko TBP-BB | | | | | | | |
| | epoxy resin other than [a] | BGE | | 100 | | | | | |
| | epoxy resin curing agent having isocyanate group other than [b] | 2-phenylethyl isocyanate | | | 78 | | | | |
| | component other than [a] to [c] | polypropylene glycol | | | | | | 9 | |
| | | Lonzacure M-DEA | | | | | | | 61 |

| | | | Comparative example 2 | Comparative example 3 | Comparative example 4 | Comparative example 5 | Comparative example 6 | Comparative example 7 | Comparative example 8 |
|---|---|---|---|---|---|---|---|---|---|

36

(continued)

| | | Comparative example 2 | Comparative example 3 | Comparative example 4 | Comparative example 5 | Comparative example 6 | Comparative example 7 | Comparative example 8 |
|---|---|---|---|---|---|---|---|---|
| epoxy resin composition | isocyanate groups in [b] [mol] / oxirane groups in epoxy resin composition [mol] | 1 | 1 | 1 | 1 | 2 | 1 | - |
| | hydroxyl group content [molOH/1kg epoxy resin composition] | 3.1 | 0.12 | 0.17 | 0.17 | 0.12 | 0.41 | 0.03 |
| | viscosity at 25°C [Pa·s] | 1.3 | < 0.1 | < 0.1 | 0.1 | 0.8 | 2.4 | > 10 |
| | urethane bonds at degree of cure of 10% [mol] / oxirane groups [mol] | 0.4 | 0.06 | 0.06 | - | 0.07 | 0.2 | - |
| | Da/(Da+Db) at degree of cure of 20% | 0 | 0.19 | 0.18 | - | 0 | 0 | - |
| | Da/(Da+Db) at degree of cure of 90% | 0.33 | 0.68 | 0.61 | - | 0.31 | 0.16 | - |
| | rubbery state elastic modulus at degree of cure of 90% | 5 | 1 | 2 | - | 26 | 3 | 13 |
| | glass transition temperature at degree of cure of 90% [°C] | 122 | 96 | 75 | - | 210 | 140 | 170 |
| | bending deflection at degree of cure of 90% [mm] | 6 | 2 | 1 | - | 1 | 6 | 5 |
| | elastic modulus at degree of cure of 90% [GPa] | 2.7 | 2.1 | 2.2 | - | 4.1 | 2.9 | 3.3 |

INDUSTRIAL APPLICABILITY

The present invention can provide an epoxy resin composition for a fiber-reinforced composite material that is so high in viscosity stability at low temperatures as to maintain low viscosity during injection into reinforcing fibers to realize good impregnating property and is also high in toughness, heat resistance, and elastic modulus and also provide a fiber-reinforced composite material produced therefrom. Accordingly, such fiber-reinforced composite materials will be applied intensively in the fields of aircraft and automobile manufacturing. They are so light in weight that their contribution to fuel cost reduction and greenhouse gas emission reduction can be expected.

**Claims**

1.  A molding method for a fiber-reinforced composite material comprising at least a reinforcing fiber [A] and a cured product of an epoxy resin composition [B], wherein the epoxy resin composition [B] includes the components [a], [b], and [c] specified below, and the epoxy resin composition [B] is cured in such a manner that the absorbance ratio Da/(Da+Db) is in the range of 0.4 to 1 in producing the fiber-reinforced composite material:

    [a] an epoxy resin having at least two oxirane groups in the molecule,
    [b] an epoxy resin curing agent having at least two isocyanate groups in the molecule, and
    [c] a catalyst,

    wherein the absorbance ratio is determined by performing FT-IR (ATR mode) analysis to measure the absorbance Da of the absorption attributed to the C=O double bond of the carboxyl group in the oxazolidone ring and the absorbance Db of the absorption attributed to the C=O double bond of the carboxyl group in the isocyanurate ring and calculating the absorbance ratio of Da/(Da+Db).

2.  A molding method for a fiber-reinforced composite material as set forth in claim 1, wherein the epoxy resin composition [B] is cured in such a manner that the absorbance ratio Da/(Da+Db) is in the range of 0.01 to 1 when epoxy resin composition [B] is at a specific degree of cure in the degree-of-cure range of 15% to 25%, wherein the degree of cure is determined from the total heat value QT of the epoxy resin composition measured by DSC performed at a temperature ramp rate of 10°C/min and the residual heat value QR of the cured product thereof by the following equation: degree of cure (%) = (QT-QR) / QT × 100.

3.  A molding method for a fiber-reinforced composite material as set forth in either claim 1 or 2, wherein the epoxy resin composition [B] is cured in such a manner that the absorbance ratio is in the range of 0.7 to or 1 in producing a fiber-reinforced composite material.

4.  A molding method for a fiber-reinforced composite material comprising at least a reinforcing fiber [A] and a cured product of an epoxy resin composition [B], wherein the epoxy resin composition [B] includes the components [a], [b], and [c] specified below and the epoxy resin composition [B] is cured in such a manner that the relation between the rubbery state elastic modulus (Gr) and the glass transition temperature (Tg) satisfies the equation 1 in producing a fiber-reinforced composite material:

    [a] an epoxy resin having at least two oxirane groups in the molecule,
    [b] an epoxy resin curing agent having at least two isocyanate groups in the molecule, and
    [c] a catalyst,

$$Tg \geq 10 \times Gr + 120 \qquad \text{(equation 1)}.$$

5.  A molding method for a fiber-reinforced composite material as set forth in claim 4, wherein the epoxy resin composition [B] is cured in such a manner that the equation 2 is satisfied:

$$0.5 \leq Gr \leq 15 \qquad \text{(equation 2)}.$$

6.  A molding method for a fiber-reinforced composite material as set forth in any one of claims 1 to 5, wherein the epoxy resin composition [B] used to produce a fiber-reinforced composite material forms a cured product having a mass decrease rate ΔWr of 10% or less,

wherein the mass decrease rate is determined from thermogravimetric analysis performed by heating a specimen from 50°C to a temperature of 800°C at a temperature ramp rate of 10°C/min under ordinary pressure in a non-oxidizing atmosphere while measuring the mass W1 of the specimen reaching 70°C and the mass W2 of the specimen reaching 320°C, which are then used for calculation by the following equation: mass decrease rate ΔWr (%) = (W1-W2) / W1 × 100.

7. A molding method for a fiber-reinforced composite material as set forth in any one of claims 1 to 6, wherein the epoxy resin composition [B] is caused to infiltrate and impregnate a base material containing the reinforcing fiber [A] placed in a molding die heated at 100°C to 200°C and cure in the molding die.

8. A molding method for a fiber-reinforced composite material as set forth in any one of claims 1 to 7, wherein the epoxy resin composition [B] is heated at 30°C to 80°C and caused to infiltrate and impregnate a base material containing the reinforcing fiber [A] placed in a molding die heated at 120°C to 180°C and cure in the molding die.

9. A molding method for a fiber-reinforced composite material as set forth in either claim 7 or 8, wherein the infiltration of the epoxy resin composition [B] into a base material containing the reinforcing fiber [A] placed in a molding die is carried out by injecting the resin through a plurality of ports provided in the die.

10. An epoxy resin composition for a fiber-reinforced composite material comprising the components [a], [b], and [c] specified below, wherein in the course of curing thereof by raising the temperature from 30°C at a rate of 10°C/min, a specific degree of cure X such that the absorbance ratio Da/(Da+Db) at that degree of cure X is in the range of 0.4 to 1 is present in the range of 85% to 95%:

   [a] an epoxy resin having at least two oxirane groups in the molecule,
   [b] an epoxy resin curing agent having at least two isocyanate groups in the molecule, and
   [c] a catalyst,

   wherein the absorbance ratio is determined by performing FT-IR (ATR mode) analysis to measure the absorbance Da of the absorption attributed to the C=O double bond of the carboxyl group in the oxazolidone ring and the absorbance Db of the absorption attributed to the C=O double bond of the carboxyl group in the isocyanurate ring and calculating the absorbance ratio of Da/(Da+Db), and wherein the degree of cure is determined from the total heat value QT of the epoxy resin composition measured by DSC performed at a temperature ramp rate of 10°C/min and the residual heat value QR of a cured product thereof by the following equation: degree of cure (%) = (QT-QR) / QT × 100.

11. An epoxy resin composition for a fiber-reinforced composite material as set forth in claim 10, wherein in the course of curing thereof by raising the temperature from 30°C at a rate of 10°C/min, a specific degree of cure Y such that the absorbance ratio Da/(Da+Db) at that degree of cure Y is in the range of 0.01 to 1 is present in the range of 15% to 25%.

12. An epoxy resin composition for a fiber-reinforced composite material comprising the components [a], [b], and [c] specified below, wherein in the course of curing thereof by raising the temperature from 30°C at a rate of 10°C/min, a specific degree of cure X such that the relation between the rubbery state elastic modulus (Gr) and the glass transition temperature (Tg) at that degree of cure X satisfies the equation 1 is present in the range of 85% to 95%:

   [a] an epoxy resin having at least two oxirane groups in the molecule,
   [b] an epoxy resin curing agent having at least two isocyanate groups in the molecule, and
   [c] a catalyst,

$$Tg \geq 10 \times Gr + 120 \qquad \text{(equation 1)}.$$

13. An epoxy resin composition for a fiber-reinforced composite material as set forth in claim 12, wherein in the course of curing thereof by raising the temperature from 30°C at a rate of 10°C/min, a specific degree of cure X such that the rubbery state elastic modulus at that degree of cure X is in the range of 0.5 to 15 MPa is present in the range of 85% to 95%.

**14.** An epoxy resin composition for a fiber-reinforced composite material as set forth in any one of claims 10 to 13, wherein the hydroxyl group content is 0.20 mol/kg or less.

**15.** An epoxy resin composition for a fiber-reinforced composite material as set forth in any one of claims 10 to 14, wherein the component [a] includes one or more types of amine type epoxy resin.

**16.** An epoxy resin composition for a fiber-reinforced composite material as set forth in any one of claims 10 to 15, wherein the component [a] includes one or more types of bisphenol type epoxy resin.

**17.** An epoxy resin composition for a fiber-reinforced composite material as set forth in any one of claims 10 to 16, wherein the ratio of the number of moles of the isocyanate groups in the component [b] to the total number of moles of the oxirane groups in all epoxy resins contained in the epoxy resin composition is in the range of 0.5 to 1.8.

**18.** An epoxy resin composition for a fiber-reinforced composite material as set forth in any one of claims 10 to 17, wherein the component [c] includes a salt of a Broensted base having a base dissociation constant pKb of 20 or more in acetonitrile and a Broensted acid.

**19.** An epoxy resin composition for a fiber-reinforced composite material as set forth in claim 18, wherein the Broensted acid in water has an acid dissociation constant pKa of 5 or less.

**20.** An epoxy resin composition for a fiber-reinforced composite material as set forth in either claim 18 or 19, wherein the Broensted base is at least one selected from the group consisting of amine compounds and imidazole compounds.

**21.** An epoxy resin composition for a fiber-reinforced composite material as set forth in any one of claims 18 to 20, wherein the Broensted acid is at least one selected from the group consisting of carboxylic acids, sulfonic acids, and hydrogen halides.

**22.** An epoxy resin composition for a fiber-reinforced composite material as set forth in any one of claims 10 to 17, wherein the component [c] includes an onium salt in which the anion is a halide ion.

**23.** An epoxy resin composition for a fiber-reinforced composite material as set forth in claim 22, wherein the onium salt is at least one selected from the group consisting of quaternary ammonium salts and quaternary phosphonium salts.

**24.** An epoxy resin composition for a fiber-reinforced composite material as set forth in any one of claims 10 to 23, wherein the component [c] accounts for 1 part by mass or more and 10 parts by mass or less relative to the total quantity, i.e. 100 parts by mass, of the component [a].

**25.** An epoxy resin composition for a fiber-reinforced composite material as set forth in any one of claims 10 to 24, wherein the component [c] is soluble in the component [a].

**26.** An epoxy resin composition for a fiber-reinforced composite material as set forth in any one of claims 10 to 25, wherein in the course of curing thereof by raising the temperature from 30°C at a rate of 10°C/min, a specific degree of cure Z such that the ratio between the existing urethane bonds and oxirane groups at that degree of cure Z is 0.10 or less is present in the range of 5% to 15%.

**27.** An epoxy resin composition for a fiber-reinforced composite material as set forth in any one of claims 10 to 26, wherein the viscosity at 25°C is in the range of 0.1 to 1.0 Pa s.

**28.** A cured product of an epoxy resin composition for a fiber-reinforced composite material as set forth in any one of claims 10 to 27.

**29.** A fiber-reinforced composite material comprising a cured product as set forth in claim 28 and a reinforcing fiber.

**INTERNATIONAL SEARCH REPORT**

| International application No. |
|---|
| PCT/JP2020/042584 |

A. CLASSIFICATION OF SUBJECT MATTER
C08J 5/04(2006.01)i; C08G 18/58(2006.01)i; C08G 59/40(2006.01)i; C08K 5/29(2006.01)i; C08K 7/02(2006.01)i; C08L 63/00(2006.01)i
FI: C08J5/04 CFC; C08G18/58 010; C08G59/40; C08K5/29; C08K7/02; C08L63/00 C

According to International Patent Classification (IPC) or to both national classification and IPC

B. FIELDS SEARCHED

Minimum documentation searched (classification system followed by classification symbols)
C08J5/04-5/10,5/24; B29B11/16, 15/08-15/14; B29C70/00-70/88; C08G18/58; C08G59/00-59/72; C08K; C08L

Documentation searched other than minimum documentation to the extent that such documents are included in the fields searched
Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 60-69121 A (SIEMENS AKTIENGESELLSCHAFT) 19 April 1985 (1985-04-19) claims, purpose of the invention, page 5, lower right column, line 2 from the bottom to page 7, lower right column, line 11, examples | 1-17, 22-29<br>18-21 |
| X<br>Y | JP 60-20922 A (SIEMENS AKTIENGESELLSCHAFT) 02 February 1985 (1985-02-02) claims, purpose of the invention, page 5, lower right column, line 10 to page 7, lower left column, the last line, examples | 1-17, 22-29<br>18-21 |
| Y | JP 2018-501391 A (HENKEL AG & CO. KGAA) 18 January 2018 (2018-01-18) claims, paragraphs [0031]-[0062], examples | 18-21 |
| A | JP 4-506678 A (THE DOW CHEMICAL COMPANY) 19 November 1992 (1992-11-19) entire text | 1-29 |

☐ Further documents are listed in the continuation of Box C.  ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 28 January 2021 (28.01.2021) | 09 February 2021 (09.02.2021) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

| INTERNATIONAL SEARCH REPORT | | International application No. | |
|---|---|---|---|
| Information on patent family members | | PCT/JP2020/042584 | |

| Patent Documents referred in the Report | Publication Date | Patent Family | Publication Date |
|---|---|---|---|
| JP 60-69121 A | 19 Apr. 1985 | US 4564651 A<br>claims, column 2,<br>lines 23-32, column<br>8, line 51 to column<br>10, line 44, examples<br>EP 130454 A2<br>DE 3323122 A<br>ES 533733 A<br>BR 8403123 A | |
| JP 60-20922 A | 02 Feb. 1985 | US 4631306 A<br>claims, column 3,<br>lines 29-38, column<br>9, line 8 from the<br>bottom to column 12,<br>line 25, examples<br>EP 129787 A2<br>DE 3323084 A<br>BR 8403106 A | |
| JP 2018-501391 A | 18 Jan. 2018 | US 2018/0051119 A1<br>claims, paragraphs<br>[0036]-[0067],<br>examples<br>WO 2016/102359 A1<br>EP 3237476 A1<br>DE 102014226838 A<br>CA 2971532 A<br>CN 107108844 A<br>KR 10-2017-0097119 A<br>BR 112017013232 A | |
| JP 4-506678 A | 19 Nov. 1992 | US 5112932 A<br>GB 8912952 A<br>WO 1990/015089 A1<br>EP 478606 A1<br>AU 5829190 A<br>CA 2018265 A<br>BR 9007428 A<br>KR 10-1992-0701289 A | |

Form PCT/ISA/210 (patent family annex) (January 2015)

**EP 4 063 436 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014184082 A
- WO 2016102358 A
- WO 2019046382 A